# EUROPEAN PATENT SPECIFICATION

(11) **EP 4 483 461 B1**
(45) Date of publication and mention of the grant of the patent: **24.12.2025**
(21) Application number: 23708538.6
(22) Date of filing: 23.02.2023
(51) Int. Cl.: H02G 11/02, H02G 9/12, B65H 75/42, B65H 75/44, B60L 3/00, B60L 53/18, B60L 53/30, B60L 53/52, B63B 21/16, B63B 27/32, B63H 21/17, B65H 57/14, B65H 59/40, B63J 3/04

(54) **ADAPTIVE TENSION COMPENSATOR SYSTEM FOR OFFSHORE CHARGING OPRATIONS BETWEEN A VESSEL AND AN OFFSHORE POWER STATION**
ADAPTIVES SPANNUNGSAUSGLEICHSSYSTEM FÜR OFFSHORE-LADEOPERATIONEN ZWISCHEN EINEM SCHIFF UND EINER OFFSHORE-KRAFTWERKSANLAGE
SYSTÈME DE COMPENSATION DE TENSION ADAPTATIF POUR DES OPÉRATIONS DE CHARGE EN MER ENTRE UN NAVIRE ET UNE CENTRALE ÉLECTRIQUE EN MER

(30) Priority: 24.02.2022 GB 202202577; 14.11.2022 GB 202216935
(43) Date of publication of application: 01.01.2025
(73) Proprietor: MJR CONTROLS LIMITED, Stockton on Tees TS17 9PP (GB)
(72) Inventor: CAIRNS, Paul Robert, Durham TS14 9PP (GB)
(74) Representative: HGF
(86) International application number: PCT/GB2023/050412
(87) International publication number: WO 2023/161637

(56) References cited:
- EP-B1- 1 836 754
- CN-A- 104 300 481
- US-A- 3 481 584
- US-A- 5 970 906

## Description

### Technical Field of Invention

This invention relates to the field of offshore charging of vessels (hybrid or fully electric) and specifically to offshore charging of vessels at an offshore location (e.g. a wind power generator or an offshore oil and gas installation) utilising a single umbilical cable for mooring to and charging directly from an offshore power generator. In particular, the present invention relates to a tension compensation system for an umbilical cable simultaneously used for mooring and charging of a vessel at an offshore location. Even more particularly, the present invention relates to a passive tension compensation system.

### Background

Offshore Support Vessels (OSV), Service Operation Vessels (SOV) or Crew Transfer Vessels (CTV) are commonly used during the construction, maintenance and operation of offshore wind farms (or any other standard or renewable offshore power generators, e.g. wave power, tidal power, solar power, fuel generators etc.). These vessels are often used to transport technicians and other personnel and/or equipment and supplies to the sites on a daily basis or for larger vessels to remain in the offshore field for several weeks. In order to reduce the carbon footprint of such offshore maintenance activities, the demand for environmentally friendly transport, such as, for example hybrid and fully electric OSVs, SOVs or CTVs is growing so as to mitigate the negative impact of hydrocarbon fuel powered vessels. However, the currently limited energy density of battery storage severely reduces the operating capability and range of electric OSVs, SOVs and CTVs (eOSVs, eSOVs, eCTVs), thus, limiting the full adoption of such vessels. Consequently, offshore charging is becoming increasingly important to recharge such eOSVs, eSOVs and eCTVs.

For example, during charging operation from a wind turbine or wind farm energy storage, the CTV may be moored to the stationary power station via a dedicated mooring line to then use a separate umbilical cable to transfer electrical power from the offshore power station to the vessel. Vessel movement caused by the ever changing sea state (waves, wind, swell etc.) can make it difficult to control the vessel position with respect to the power station, i.e. control the relative distance and orientation between the vessel and the power station during charging when the umbilical cable and mooring line are connected to the power station. Separate elastic synthetic mooring lines are often used to avoid line failure as they absorb potentially damaging tension forces away from the separately connected charging cable (which has a high axial stiffness). However, the use of multiple separate lines can provide its own risk of entanglement. Also, potential snapback of the elastic mooring line(s) can pose a substantial risk to personnel in the event of line failure.

In case attempts are made to utilise single, relatively inelastic, charging cables to moor the vessel and avoid potential issues from entanglement, active compensation is essential. Here, the reeling drum 16 is actively driven by the electrical motor 18 and its variable speed drive unit in a so called "torque-control" mode, where a controller monitors the torque on the reeling drum 16 (caused by the tensioning cable) and drives the reeling drum motor so as to maintain cable tension within predetermined limits. However, active tension control presents a substantial risk in case of a system failure, i.e. the power and/or motor drive fail during operation. Such a failure can have severe consequences, not only risking damage to the system but also endangering the personnel.

Consequently, it is an object of the present invention to provide an improved system and method for charging CTVs (or eCTVs) at an offshore location (e.g. wind farm) capable of avoiding or at least minimising the disadvantages and potential risks of the systems known in the art. In particular, it is an object of the present invention to provide a system that provides for a simplistic and safe connection between the vessel and the power station, utilising the umbilical charging cable simultaneously as a mooring line and a charging cable.

### Summary of the Invention

The present invention is defined in independent claim 1.

According to the invention, there is provided an adaptive tension compensator system for offshore charging of a vessel via an umbilical cable of a motor driven reeling drum provided at a power station, comprising:
a reeling drum, configured to rotate about a first rotational axis;
a motor hub member, mounted to a motor shaft of a motor and configured to transmit rotary motion between the motor and the reeling drum along a first rotational axis between the motor and the reeling drum along said first rotational axis;
a reel hub member, mountable to the reeling drum, arranged coaxial with said motor hub member and configured to transmit rotary motion between said reeling drum and said motor, and
a coupling mechanism, operably coupled between said reel hub member and said motor hub member, adapted to transmit rotary motion between said reel hub member and said motor hub member when said motor is in a first mode, and adapted to provide a biased rotational motion of said reel hub member about said first rotational axis between a first angular position and a second angular position relative to said motor hub member, when said motor is in a second mode, wherein said coupling mechanism comprises a first elastic energy storage system adapted to resiliently-elastically bias said reel hub member towards said first angular position, and wherein said motor shaft is actively or passively rotatable when the motor is in said first mode, and wherein the motor shaft is rotatably locked when the motor is in said second mode.

This provides the advantage of a single umbilical charging cable used simultaneously as a mooring line and charging (power) cable where the risk of entanglement and potential damage (from over tension) is eliminated. Further, the system of the present invention provides the charging cable, which typically has a relatively high axial stiffness in order to protect the "power" cores from excessive strain, with elastic characteristics or flexibility (i.e. introduces "elasticity") normally only demonstrated in elastic mooring lines. This added elasticity reduces axial and transverse loads on the cable, for example, in wave conditions. Furthermore, the system of the present invention advantageously provides for passive compensation, i.e. compensation activation independent of any electric power supply, making the present system safer, more reliable and cost effective, especially in the event of power cuts or other failures that can occur while the vessel is connected to the power station. In addition, the present invention provides a highly adaptive compensation system that can seamlessly switch between different modes for different uses. For example, in a first mode, the reeling drum is actively coupled to the motor drive, allowing the motor to actively drive the reeling drum (e.g. to pay-out/pay-in the cable, or to provide active compensation), or to simply freewheel the reeling drum about its rotational axis (with the motor being in freewheel). In a second mode, the reeling drum is allowed to biasingly decouple from the motor drive, thus, introducing a predetermined "elasticity" into the connected charging cable during use.

Preferably, said first elastic energy storage system comprises at least one first accumulator configured to provide a predetermined unidirectional spring-force responsive to rotational motion of said reel hub member from said first angular position towards said second angular position relative to said motor hub member. Even more preferably, said first accumulator is any one of a piston accumulator, a diaphragm accumulator, a bladder accumulator, a spring-type accumulator and a gas-charged accumulator.

Advantageously, said first elastic energy storage system comprises at least two diametrically opposed first accumulators, each one adapted to provide said predetermined unidirectional spring-force synchronous with the other. Preferably, said at least one first accumulator is operably coupled with a hydraulic or pneumatic cylinder.

This provides the advantage that the reeling drum can be driven by the motor to actively pay out or reel in the charging cable, but also provide a rotational bias to an axially loaded charging cable within a predetermined angular range, without any adjustments or alterations to the coupling mechanism between the reeling drum and the motor drive.

Advantageously, the adaptive tension compensator system further comprises a gear mechanism operably coupled between the motor shaft and said reel hub member, and adapted to provide a predetermined gear ratio between the motor shaft and the reeling drum. Preferably, said gear mechanism is an epicyclic gear mechanism.

This provides the advantage of a different (e.g. increased) biased rotational range of the reeling drum when the motor is in a second mode. The gear mechanism may be a variable gear mechanism adapted to provide a plurality of different gear ratios.

Advantageously, the adaptive tension compensator system further comprises a stopper assembly adapted to stop rotational motion of said reel hub member at said second angular position relative to said motor hub member. Preferably, said stopper assembly comprises a contact element coupled to said reel hub member, and a surface element coupled to said motor hub member and adapted to stoppingly engage with said contact element when said reel hub member rotatingly moves to said second angular position relative to said motor hub member.

Advantageously, the adaptive tension compensator system comprises a cable suspension mechanism configured to guidingly and suspendingly engage the umbilical cable of the reeling drum, comprising a suspension arm operably coupled to a support frame of the motor driven reeling drum and configured to biasingly move between an upper arm position and a lower arm position about a pivot axis arranged parallel to said first rotational axis.

This provides the advantage of an additional compliance or "elasticity" to the connected charging cable supplemental to the reel drum compensator, as well as, guiding or limiting the charging cable within a predetermined range of motion.

Advantageously, said cable suspension mechanism comprises a second elastic energy storage energy system adapted to resiliently-elastically bias said suspension arm towards said lower arm position. Preferably, said second elastic energy storage system comprises at least one second accumulator configured to provide a second unidirectional spring-force responsive to pivotal rotation of said suspension arm about said pivot axis.

Advantageously, the adaptive tension compensator system further comprises a slewing mechanism operably mounted between the power station and the motor driven reeling drum, configured to permit rotation of the motor driven reeling drum about a second rotational axis that is perpendicular to said first rotational axis.

Advantageously, the adaptive tension compensator system further comprises a skidding mechanism, operably mounted between the power station and the motor driven reeling drum, configured to permit movement of the motor driven reeling drum with regards to the power station along a predetermined track.

The slewing and skidding mechanisms comprise the advantage that the reeler drum is able to track the vessel position relative to the charger station within a predetermined range of motion, thus, minimising the risk of potential cable damage from excessive side loads and excessive cable fatigue caused by cyclic bending tension and/or by vessel movement about the power station.

Advantageously, the adaptive tension compensator system further comprises a cable connector mountable to a vessel and adapted to receive and lock an end portion of the umbilical cable of the motor driven reeling drum, and provide a predetermined range of motion of the received umbilical cable. Preferably, said cable connector comprises a two-axes gimble mechanism adapted to allow said cable connector to rotatingly move about a first gimble axis and a second gimble axis that is perpendicular to said first gimble axis. Even more preferably, said gimble mechanism is adapted to move said cable connector actively and/or passively.

Advantageously, the cable connector comprises a bell-mouth member adapted to guidingly receive the end portion of the umbilical cable. Preferably, said cable connector comprises a docking mechanism adapted to mechanically and electrically connect with the end portion of the umbilical cable. Even more preferably, said docking mechanism is adapted to disconnect with the end portion of the umbilical cable at a predetermined pulling force acting on the umbilical cable.

### Brief Description of the Drawings

An exemplary embodiment of the invention is explained in more detail hereinbelow with reference to the figures:
**Figure 1** shows an overview of the adaptive tension compensator system in situ, i.e. with the charging cable reeled out and coupled to the cable connector of a vessel;
**Figure 2** shows a perspective side view of an example embodiment of the tension compensator system as installed on the wind turbine or power generator (vessel connector system is not shown);
**Figure 3** shows (a) side view left, (b) side view right and (c) front view of the tension compensator system of Figure 2;
**Figure 4** shows an exposed close-up view of the passive reel drum compensator system coupled to the reel drum but without the cable suspension mechanism and the slewing and skidding mechanisms;
**Figure 5** shows the passive reel drum compensator system detached from the reeling drum and without the reel motor (a) in a perspective side view, (b) in a left-side view (from reeling drum side) and (c) in a right-side view (from motor side);
**Figure 6** shows a cross-sectional side view of the passive reel drum compensator system of Figure 5, (a) a cross-sectional front view along A-A, and (b) a cross-sectional side view along B-B;
**Figure 7** shows a perspective side-view of the passive reel drum compensator system (without the reeling drum), (a) in a retracted position (reeling drum at first angular position) and (b) in an extended position (reeling drum at a second angular position);
**Figure 8** shows schematic illustrations of alternative coupling mechanisms (i.e. the biasing mechanism coupling the motor hub member and the reel hub member), (a) a differential gear driven passive compensator using a bevel gear mechanism, and (b) a differential gear driven passive compensator using a planet gear mechanism (e.g. coupled between the reel hub member and the motor hub member;
**Figure 9** shows the cable suspension mechanism coupled to the reeling drum (reel drum compensator system, slew and skidding mechanism have been removed), (a) a perspective side-view, and (b) a perspective cross-sectional side-view along the median plane;
**Figure 10** shows the cable suspension mechanism coupled to the reeling drum (incl. the reel drum compensator system and the slew and skidding mechanism), (a) in rest position (i.e. cable tension insufficient to activate the compensation) and (b) in the fully compensated position (i.e. cable tension sufficient to rotate the suspension arm up);
**Figure 11** shows detailed close-up views of (a) the roller mechanism (spooler), (b) transverse cross-section of the bellmouth (side load detection) and (c) the proximity switches and encasing rollers of the bellmouth;
**Figure 12** shows (a) a perspective front-side view of the adaptive tension compensator system, including the slewing and skidding mechanism, and (b) a perspective rear-side view of the slewing and skidding mechanism without the reeling drum;
**Figure 13** (a) to (e) shows a series of perspective views of the adaptive tension compensator system in different slew and skid positions, and (f) a schematic illustration of the degrees of freedom (DOF) of the slewing mechanism and the skidding mechanism, as well as, the reeling drum (rotation) and the suspension arm (rotation);
**Figure 14** shows the skidding mechanism coupled to the wind turbine (a) in a straight skid rail configuration and (b) in a horseshoe skid rail configuration, as well as, vessel following patterns (c) for the straight skid rail configuration and (d) for the horseshoe skid rail configuration;
**Figure 15** shows the cable connector installed on the vessel (a) a perspective view of the bellmouth, (b) a cross-sectional side-view of the latch and stab mechanism through the median plane of the bellmouth, and (c) a perspective close-up view of the lateral control cylinder and passive side load compensator of the cable connector;
**Figure 16** (a) to (g) to shows a series of views illustrating the two degrees of movement of the gimbal mechanism, i.e. (a) to (c) fore/aft movement and (e) to (g) starboard /port movement of the bellmouth;
**Figure 17** shows a close-up side view of the latch mechanism of the cable connector (a) in the open position and (b) in the closed position;
**Figure 18** shows (a) a detailed close-up view of the stab mechanism without the housing and (b) a cross-sectional view of the stab mechanism along its frontal plane;
**Figure 19** shows the umbilical connector coupled to the end portion of the umbilical charging cable including a bend restrictor (or bend stiffener), (a) in a perspective side-view, (b) in a perspective front-view and (c) a transverse cross-sectional view.
**Figure 20** shows a simplified schematic of the hydraulic circuit of the latch mechanism;
**Figure 21** shows a scenario of (a), (b) receiving the umbilical connector in the bellmouth (funnel) of the vessel cable connector, (c), (d) latching onto the received umbilical connector, and (e), (f) "stabbing" into electrical connection with the received umbilical connector;
**Figure 22** shows a simplified schematic of the electrical system architecture;
**Figure 23** shows a "storyboard" overview of the main steps of the charging process;
**Figure 24** shows a "storyboard" overview of the catenary control status related to the main sequence steps shown in Figure 23;
**Figure 25** shows a "storyboard" overview of the slew/skid working modes active for each step of the charging process;
**Figure 26** shows a "storyboard" overview of the bellmouth (funnel) working modes active for each step of the charging process;
**Figure 27** shows a "storyboard" overview of the sequence of steps of the voluntary emergency release;
**Figure 28** shows simplified illustration of a wireless link between the vessel (CTV) and the power station (OWT);
**Figure 29** shows a simplified illustration of a possible cloud architecture for the control system;
**Figure 30** shows a simplified illustration of a communication flow diagram for the steps of the charging process (see Figure 23);
**Figure 31** shows a schematic illustration of charging methods (a) connected directly to the batteries of the vessel, and (b) connected to the DC system of the vessel so as to provide DC voltage, and
**Figure 32** shows various screenshots of a software application: (a) the position and live status of all nearby chargers, (b) the booking scheduler, (c) the chat feature; (d) the position and status of vessels (CTVs) close to the power station (OWT), (e) the booking scheduler of the power station and (f) the system status of the power station.

### Detailed Description

Abbreviations used throughout the description include the following:
- **AHC**: Active Heave Compensation
- **BMS**: Battery Management System
- **CTV**: Crew Transfer Vessel
- **eCTV**: Battery powered Crew Transfer Vessel
- **ER**: Emergency Release
- **FMECA**: Failure Modes, Effects & Criticality Analysis
- **MRU**: Motion Reference Unit
- **OWF**: Offshore Windfarm
- **OWT**: Offshore Wind Turbine
- **OSS**: Offshore Substation

The described example embodiment relates to a tension compensator system for an umbilical line / cable simultaneously used for mooring and charging.

Certain terminology is used in the following description for convenience only and is not limiting. The words 'right', 'left', 'lower', 'upper', 'front', 'rear', 'upward', 'down', 'downward', 'above' and 'below' designate directions in the drawings to which reference is made and are with respect to the described component when assembled and mounted (e.g. *in situ*)*.* The words 'inner', 'inwardly' and 'outer', 'outwardly' refer to directions toward and away from, respectively, a designated centreline or a geometric centre of an element being described (e.g. central axis), the particular meaning being readily apparent from the context of the description.

Further, as used herein, the terms 'connected', 'attached', 'coupled', 'mounted' are intended to include direct connections between two members without any other members interposed therebetween, as well as, indirect connections between members in which one or more other members are interposed therebetween. The terminology includes the words specifically mentioned above, derivatives thereof, and words of similar import.

Further, unless otherwise specified, the use of ordinal adjectives, such as, 'first', 'second', 'third' etc. merely indicate that different instances of like objects are being referred to and are not intended to imply that the objects so described must be in a given sequence, either temporally, spatially, in ranking or in any other manner.

Through the description and claims of this specification, the terms 'comprise' and 'contain', and variations thereof, are interpreted to mean 'including but not limited to', and they are not intended to (and do not) exclude other moieties, additives, components, integers or steps.

Throughout the description and claims of this specification, the singular encompasses the plural unless the context otherwise requires. In particular, where the indefinite article is used, the specification is to be understood as contemplating plurality, as well as, singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive.

In the following description, the invention is described within the context of an offshore charging or power supply system, thus, providing a functional description of the Turbine/Substation Offshore Charging System. For this specific example, the system has been developed as an enabling technology to provide offshore charging to all electric and hybrid electric windfarm support vessels and other marine vessels, and is intended to be installed at an offshore windfarm, either on a wind turbine foundation or an offshore substation. However, it is understood by the person skilled in the art that the present invention is suitable for any offshore power station able to supply power (from traditional and/or renewable energy sources) to a charging vessel (e.g. eCTV) via a charging cable.

In general, the purely passive (i.e. independent of any electrical power source) adaptive tension compensator system of the present invention provides a safe and reliable solution to protect the umbilical charging cable 14 and control mooring loads even in the event of failure.

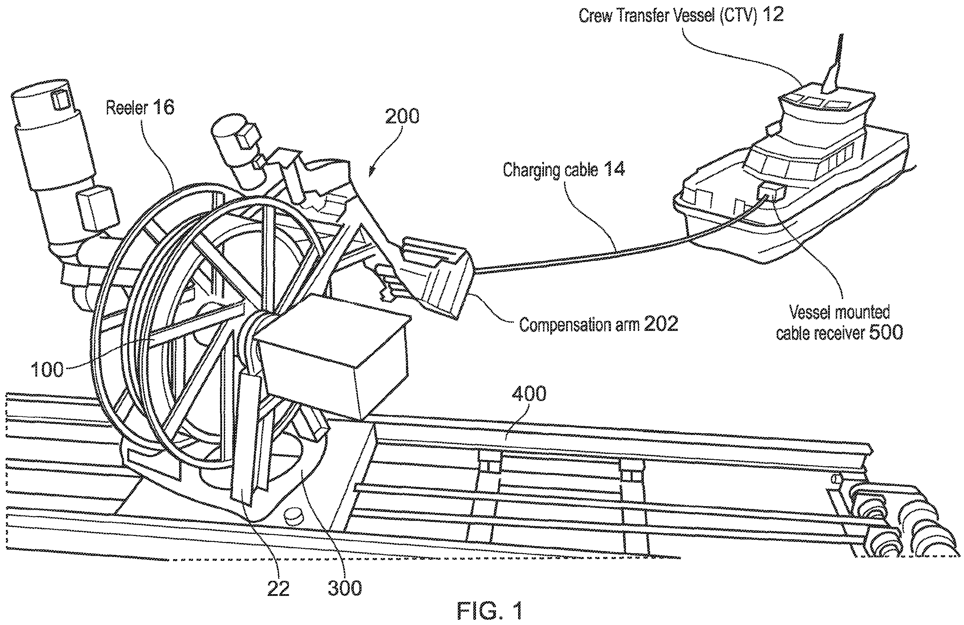

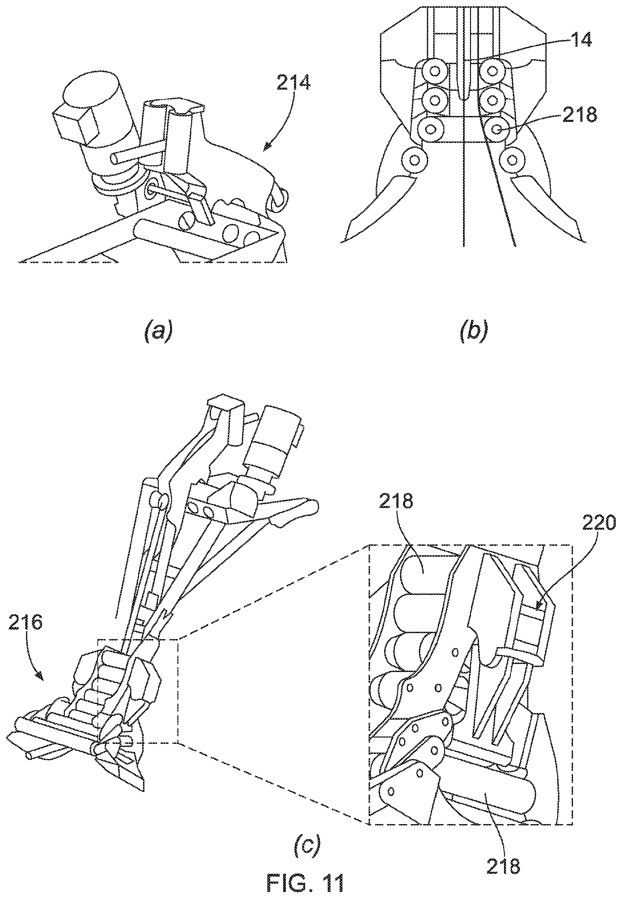

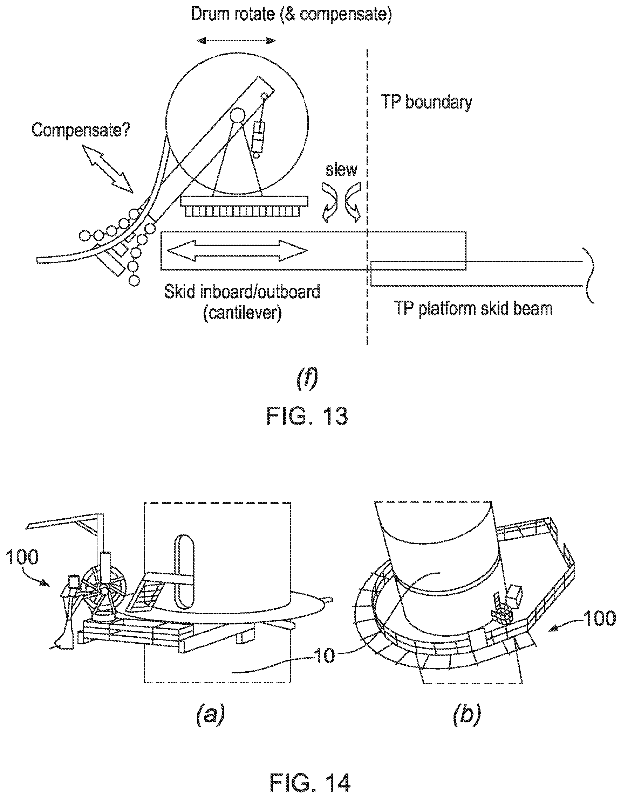

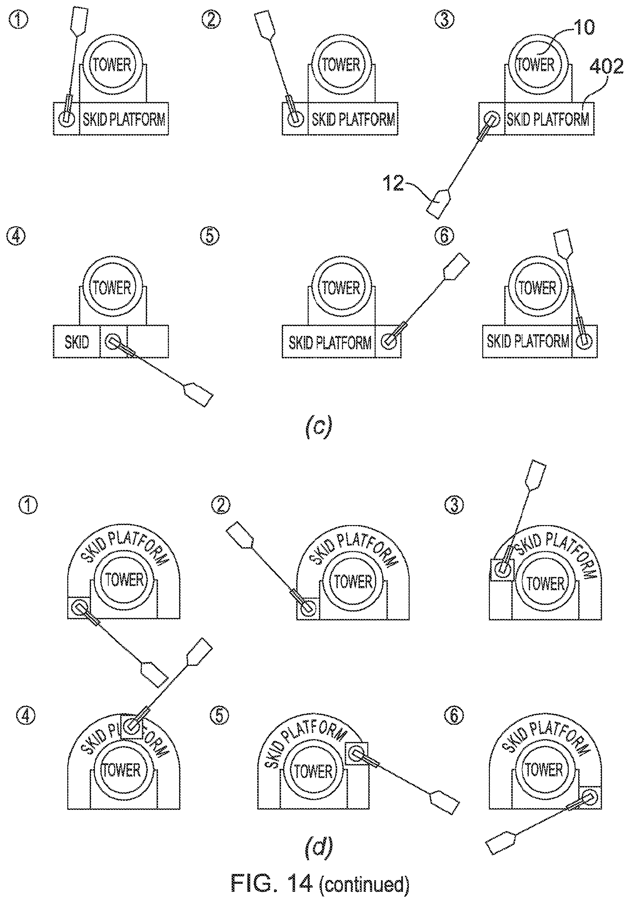

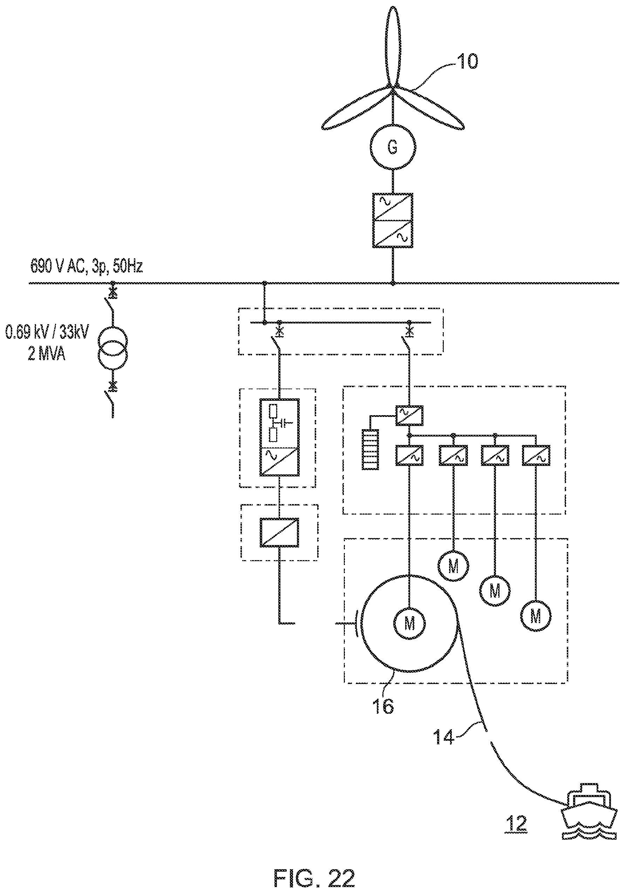

As illustrated in Figure 1, the adaptive tension compensator system embodying the claimed aspects of the present invention comprises four sub-systems, (i) the reel drum compensator mechanism 100 coupled to the reeling drum 16 storing the umbilical charging cable 14, (ii) the cable suspension arm 200 coupled to the reeling drum support frame 22, (iii) the slewing 300 and skidding mechanism 400 coupled to the power station, e.g. wind turbine 10 (see Figure 14 and 22) and operably supporting the reeling drum 16, and (iv) the vessel connector system 500 mounted on the vessel 12. Each of the four sub-systems will be described separately.

### (i) Reel drum compensator mechanism

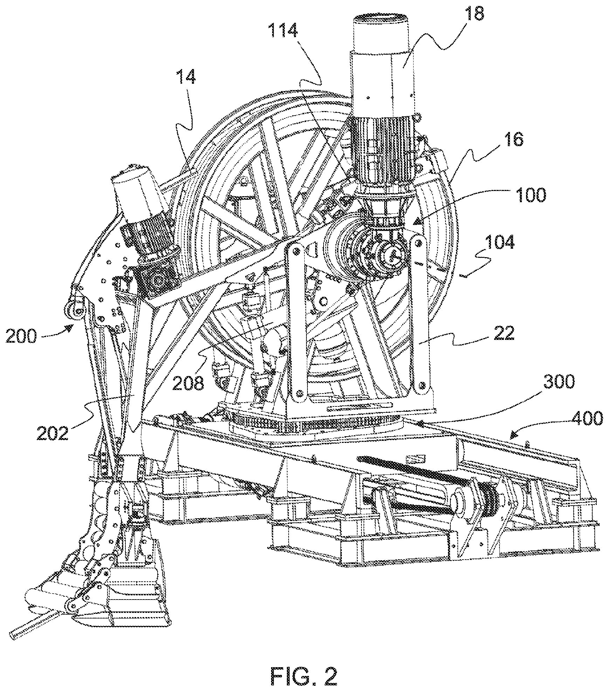

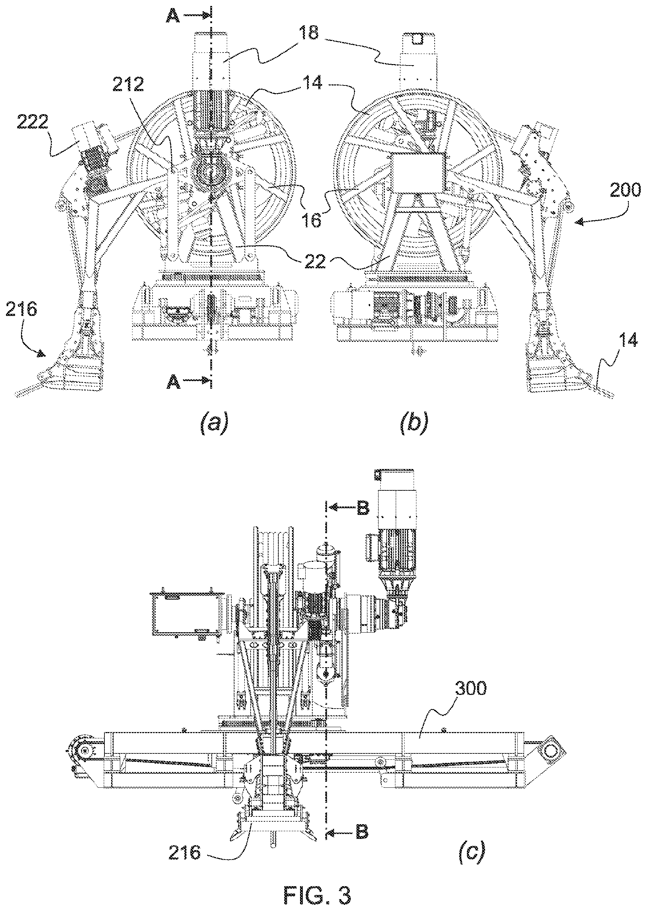

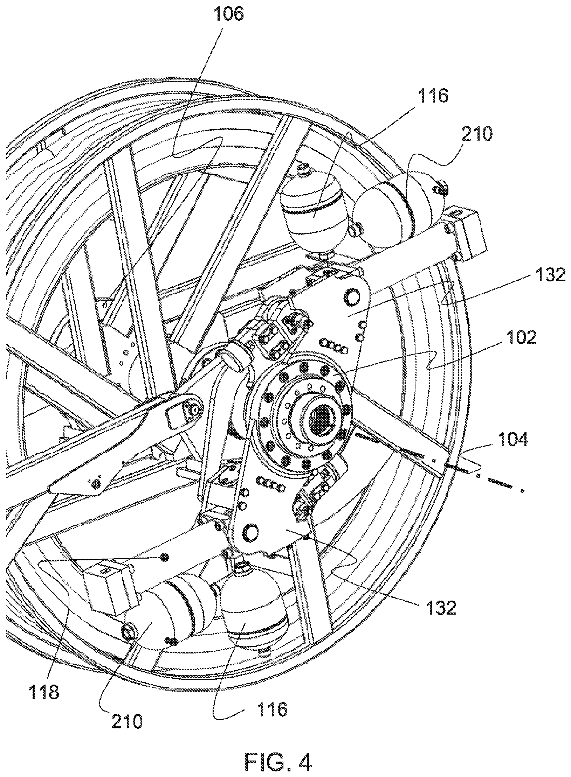

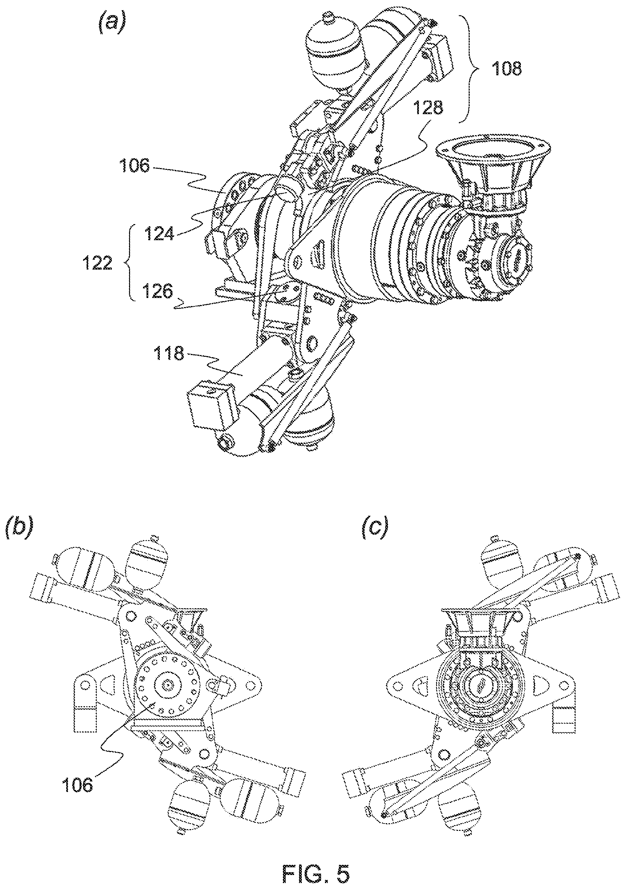

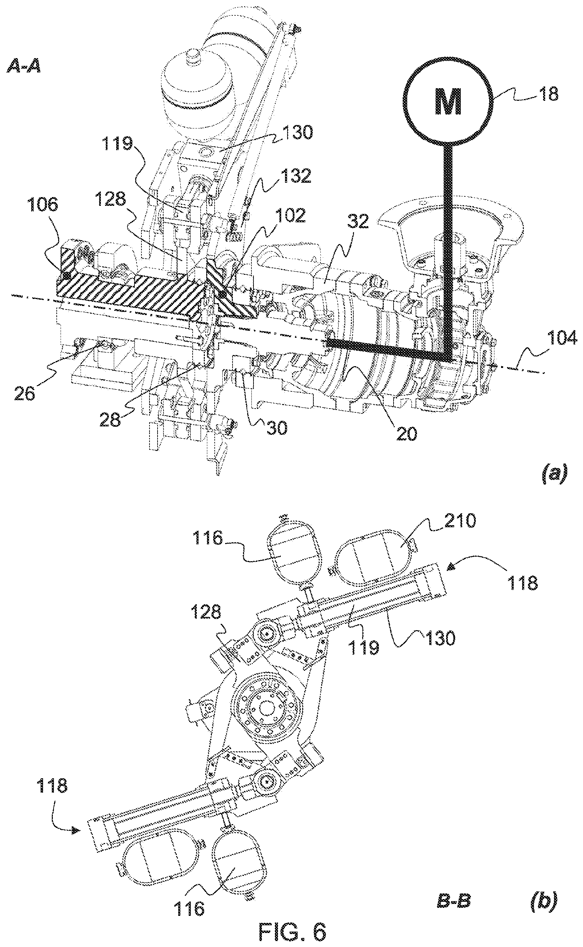

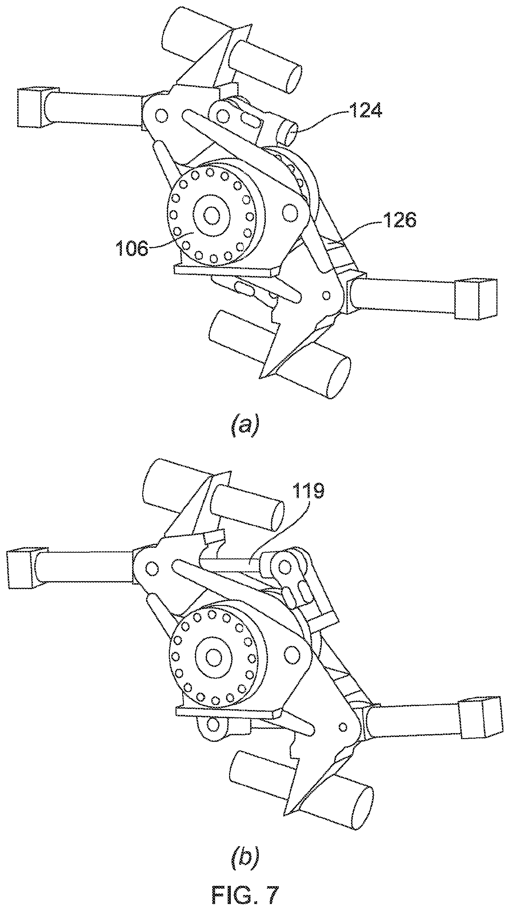

Referring now to Figures 2 to 7, the reel drum tension compensator mechanism 100 is operably coupled between the reeling drum 16 and the motor shaft 20 of the motor 18 so as to transmit rotational movement between the reeling drum 16 and the motor 18.

The reel drum tension compensator mechanism 100 comprises a reel hub coupling or reel hub flange member 106 mounted to the reeling drum 16 and a motor hub coupling or motor hub flange member 102 mounted to the motor shaft 20 of the motor 18. Both, the reel hub coupling 106 and the motor hub coupling 102 are mounted coaxial with the reel's rotational axis 104 between the reeling drum 16 and the motor shaft 20 forming a rotatable joint between the reeling drum 16 and the motor shaft 20. The reel hub coupling 106 is rotatably supported by a first bearing 26 mounted to the support frame 22 and a second bearing 28 interfacing the reel hub coupling 106 and the motor hub coupling 102. Further, the motor hub coupling 102 is rotatably supported by the second bearing 28 and a third bearing 30 provided between the motor housing 32 and a portion of the motor hub coupling 102.

Two diametrically opposing hydraulic cylinders 118 are operably coupled with respective accumulators 116 and configured to provide a predetermined spring force via a piston rod 119 (i.e. forming an elastic energy storage system). For each of the two opposing hydraulic cylinders 118, a proximal end of the piston rod 119 is operably coupled (i.e. movably) with a reel hub link member 128 that is radially extending away from a distal end portion of the reel hub coupling 106. The cylinder barrel 130 is operably coupled with a motor hub link member 132 that is radially extending away from a distal end portion of the motor hub coupling 102. Thus, the two opposing hydraulic cylinders 118 are operably linked between the reel hub coupling 106 and the motor hub coupling 102, forming a coupling mechanism 108 that allows for unidirectional rotational movement of the reel hub coupling 106 relative to the motor hub coupling 102 about the common rotational reel axis 104. In particular, the hydraulic cylinders 118 and reel hub link member 128 and motor hub link member 132 are arranged in such a way that relative rotational movement between the reel hub coupling 106 and the motor hub coupling 102 is only possible in a first direction of the reeling drum 16, i.e. the direction of the reeling drum 16 paying out the charging cable 14. When the reeling drum 16 is rotating in a second, opposite direction, i.e. the direction when paying or reeling in the charging cable 14, the reel hub link member 128 is stoppingly engaged with the motor hub link member 132, thus, preventing any relative rotational movement between the reel hub coupling 106 and the motor hub coupling 102 in the second direction.

The angular range of the reel hub coupling 106 relative to the motor hub coupling 102, when moving in the first direction, is limited to the extension length of the piston rods 119 of the hydraulic cylinders 118, but may be increased using suitable gear mechanism between the reeling drum 16 and the reel hub coupling 106.

For this particular example embodiment, a hydraulic cylinder / accumulator mechanism 118, 116 (using a liquid and/or gas) is utilised to provide an elastic resistance (e.g. spring force or damping) to the rotational movement of the reel hub coupling 106 relative to the motor hub coupling 102. However, it is understood by the person skilled in the art that any other suitable biasing means, such as a spring or dampening member, - device, - system or - assembly, may be used to provide the rotational bias to the reel hub coupling 106 when moved relative to the motor hub coupling 102. For example, the bias may be provided by any one of a spring (torsion, helical coil, leaf etc.), an elastic material (resiliently stretchable or compressible), a hydraulic or pneumatic accumulator, or any combination thereof.

In the present example, the hydraulic cylinders 118 are adapted to provide for a 50° (degrees) rotation of the reeling drum 16 (e.g. having a drum radius of 0.65m) for a full stroke of the piston rods 119 when subjected to a 2 tonne cable load, translating to 0.60m of cable length that is released into the catenary at a 2 tonne cable load. As discussed earlier, the pay-out cable length may be varied (e.g. increased) using a suitable gear mechanism coupled to the reeling drum 16.

A stopper mechanism 122 is provided by a contact or bumper 124 mounted at the distal end of the reel hub link member 128 and a surface element 126 mounted to the motor hub link member 132 of the opposing hydraulic cylinder 118. The contact or bumper 124 is arranged so as to stoppingly engage with the surface element 126 when the reel hub coupling 106 moves from a first angular position (relative to the motor hub member 102) where the piston rod 119 is fully retracted to a second angular position (relative to the motor hub member 102) where the piston rod 119 is fully extended.

During use, the umbilical charging cable 14 is paid out for connection with a vessel 12. The initial pay-out is driven by the motor 18, once connected, the vessel 12 reels off the cable 14 when moving away from the power station 10. Here, the motor 18 is "switched" into a "follower mode", i.e. the motor shaft 20 is either allowed to "freewheel" about its rotational reel axis 104 (when rotating the reeling drum 16), or the motor shaft 20 is rotated by the activated motor 18 (so as to actively drive the reeling drum 16). When the motor 16 is in the "follower mode", both, the reel hub coupling 106 and the motor hub coupling 102 move synchronously as one unit about the rotational reel axis 104 when rotating the reeling drum 16 into the first direction (paying out the cable 14). When moving the reeling drum 16 in the first direction, the biasing force provided by the elastic energy storage system 114 (i.e. hydraulic cylinders 118 and accumulator 116) prevents relative rotational movement between the reel hub coupling 106 and the motor hub coupling 102. When actively driving the reeling drum 16 with the motor 18 to pay in (second direction) the charging cable 14, the biasing force of the elastic energy storage system 114 (i.e. hydraulic cylinders 118 and accumulator 116) prevents relative rotational movement between the reel hub coupling 106 and the motor hub coupling 102. When actively driving the reeling drum 16 with the motor 18 to pay out (first direction) the charging cable 14, the stoppingly cooperating arrangement of the reel hub link member 128 and the motor hub link member 132 prevents relative rotational movement between the reel hub coupling 106 and the motor hub coupling 102.

Once the charging cable 14 is connected to the vessel 12 and the vessel 12 is at a predetermined distance from the power station 10, the motor 18 is "switched" into a "mooring mode", i.e. the motor sits in standby with brakes on powered by its variable speed drive (at zero speed "waiting" to actively assist the passive compensator when required), thus allowing biased rotational movement of the reel hub coupling 106 relative to the "locked" motor hub coupling 102. When the umbilical cable tension increases (e.g. by wave motion) to above a predetermined threshold determined by the characteristics of the elastic energy storage system 114 (i.e. hydraulic cylinders 118 and accumulator 116), the spring or damping force provided by the elastic energy storage system 114 (i.e. hydraulic cylinders 118 and accumulator 116) is overcome and the piston rods 119 extend out of their respective cylinder barrels 130, allowing the reeling drum 16 to rotate and pay out a length of charging cable 14, thus, reducing the tension in the umbilical charging cable 14. When the cable tension decreases (e.g. through wave motion), the piston rods 119 retract back into the cylinder barrels 130 rotating the reeling drum 16 back and paying in a length of the charging cable 14. The reeling drum 16 rotates forward (tension increases) against the spring force, and back (tension decreases) caused by the spring force in a reciprocating motion instigated, for example, by the waves. Alternatively, the elastic energy storage system 114 may comprise one or more fluid filled spring dampers.

As a consequence of the limited biased rotation of the reeling drum 16, peak tension in the cable 14 is reduced to an acceptable (i.e. safe) level, preventing or at least minimising potential damage during charging operation.

In addition, the passive reel drum tension compensator 100 may be used in combination with active tension load compensation. For example, suitable sensors feed information of the cable tension to a controller while the reeling drum 16 is paying out the cable 14 and the controller operates the reeling drum 16 in a "constant tension" mode automatically paying out (or in) the charging cable 14, so as to maintain or limit the cable tension during use. Thus, the active tension load compensation can be used to assist the passive reel drum tension compensator 100 in cases of extreme vessel motion by limiting the cable tension to a predetermined maximum, so that the cable 14 may be disconnected safely, if required. Suitable sensor for monitoring the cable tension may include feedback from load cells and the stroke / pressure of the hydraulic cylinders 118.

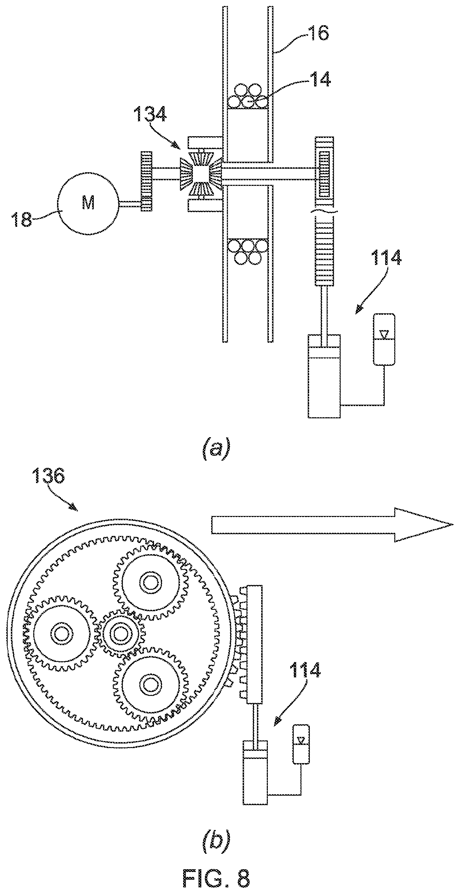

Figure 8 illustrates alternative reel drum couplings that may be used with the reel drum tension compensator 100. For example (a) a bevel gear mechanism may be used to couple the motor 18 and reeling drum16 with an elastic energy storage system, or (b) a planet gear mechanism may be used to couple the motor 18 and reeling drum16 with an elastic energy storage system.

### (ii) Cable suspension mechanism

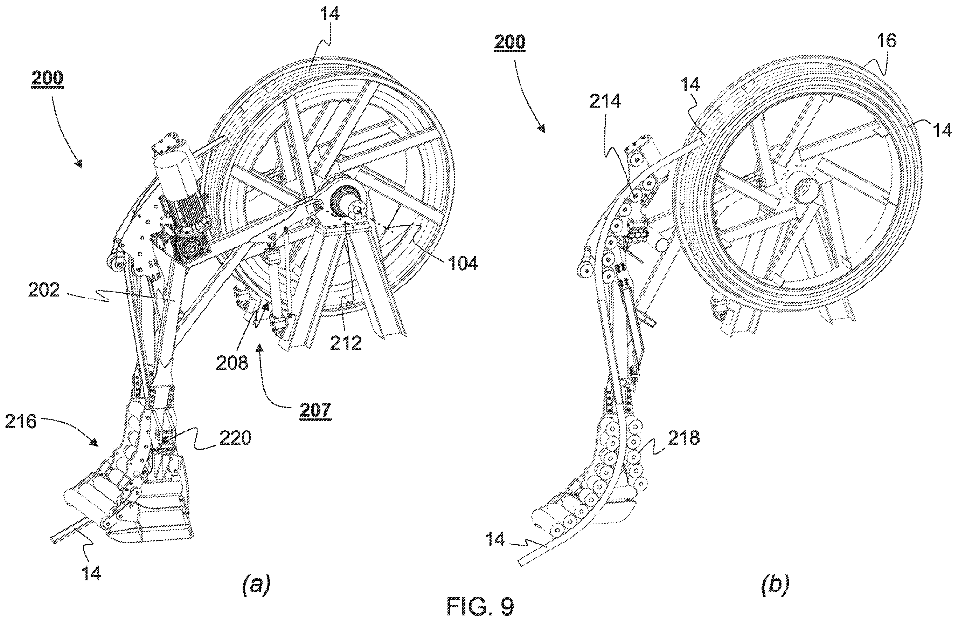

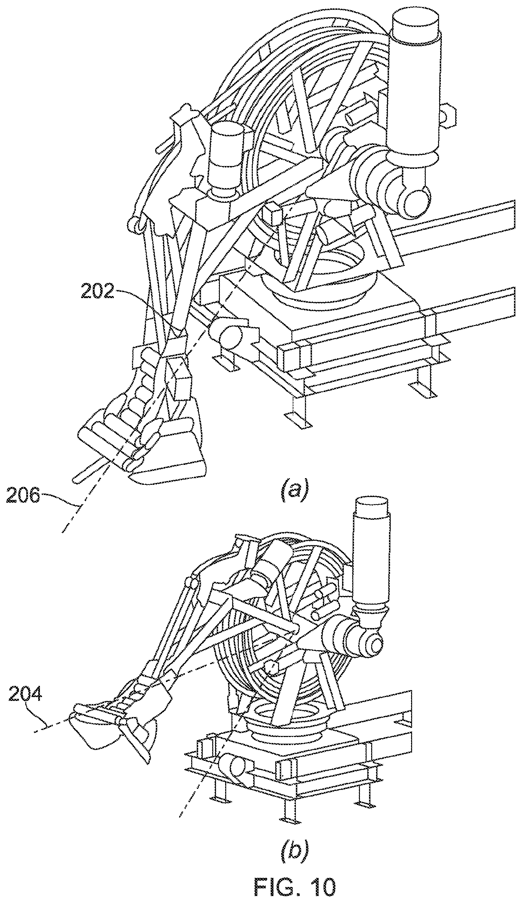

Referring now to Figures 9 to 11, the cable suspension mechanism 200 comprises a suspension arm 202 operably coupled to the support frame 22 of the reeling drum 16, and configured to rotate about a rotational arm axis 212 that is arranged parallel to the rotational reel axis 104 of the reeling drum 16. Further, the suspension arm 202 is constrained by a second elastic energy storage system 207 comprising two parallelly arranged hydraulic cylinders 208 connected to respective accumulators 210. The hydraulic cylinders 208 and accumulators 210 are adapted to provide a spring force or damping force as described for the reel drum tension compensator 100. In the rest position (lower arm position 206 ,see Figure 10(a)), the suspension arm 202 is rotated fully down into a substantially vertical position with the hydraulic cylinders 208 fully retracted. In the compensating arm position (upper arm position 204, see Figure 10(b)) the suspension arm 202 is rotated upwards towards a horizontal position with the hydraulic cylinders 208 fully extended and biased to retract back.

As shown particularly in Figures 9 and 11, the suspension arm 202 further comprises a bellmouth 216 at its distal end. The bellmouth 216 is shaped by a plurality of rollers 218 arranged around the four sides of the bellmouth 216 and encasing a charging cable 14 when guided from the reeling drum 16 to the vessel 12. The encasing rollers 218 are arranged to form a bell shape with its wider opening at the distal end of the suspension arm 202. Each of the two lateral arrays of rollers 218 (side rollers) may be coupled to proximity switches 220 that are adapted to measure side loads (to be transmitted to the controller). These switches 220 may be used to actively drive a slewing 300 and/or skidding mechanism 400 (described in more detail in a following section) in order to reduce the side loads in the catenary. Proximity switches 220 may also be provided to the upper and lower arrays of rollers 218 so as to detect tension loads in the charging cable 14.

Low friction rollers in the form of a spooler 214 are also provided at a proximal top end of the suspension arm 202 and are configured to guide the charging cable 14 from the reeling drum 16 over the suspension arm 202 into and out of the bellmouth 216. The spooler 214 may be driven by a motor 222 so as to actively move and guide the charging cable 14 from the reeling drum 16 towards the vessel 12. Alternatively, the spooler 214 may be driven passively via a chain or gear mechanism from the reeling drum 16.

During use, the cable suspension mechanism 200 cooperates with the reel drum tension compensator 100, i.e. adding further "elasticity" to the catenary when the vessel 12 is moored to the power station 10 during charging. In particular, as cable tension increases, the suspension arm 202 is rotated upwards extending the hydraulic cylinders 208 (and the charging cable 14) so as to reduce the tension in the umbilical charging cable 14. The biasing force (spring/dampening force) provided by the suspension mechanism 200 may be lower than the biasing force (spring/dampening force) provided by the reel drum tension compensator 100, so that the suspension arm 202 reacts to an increase of tension before the reel drum tension compensator 100 is activated (i.e. paying out a length of charging cable 14). However, it is understood by the person skilled in the art that any suitable combination (i.e. spring or dampening force) between the two cooperating compensator mechanism 100, 200 may be used without diverting from the scope of this invention, i.e. the biasing force provided by the cable suspension mechanism 200 may be greater than or equal to that of the reel drum tension compensator 100.

In this particular example, the suspension arm 202 may be configured to rotate upwards by about 25° (degrees) at a cable tension load of 2 tonnes. However, it is understood that any other suitable angular range may be provided, directly or via gear mechanisms.

### (iii) Slewing and skidding mechanism

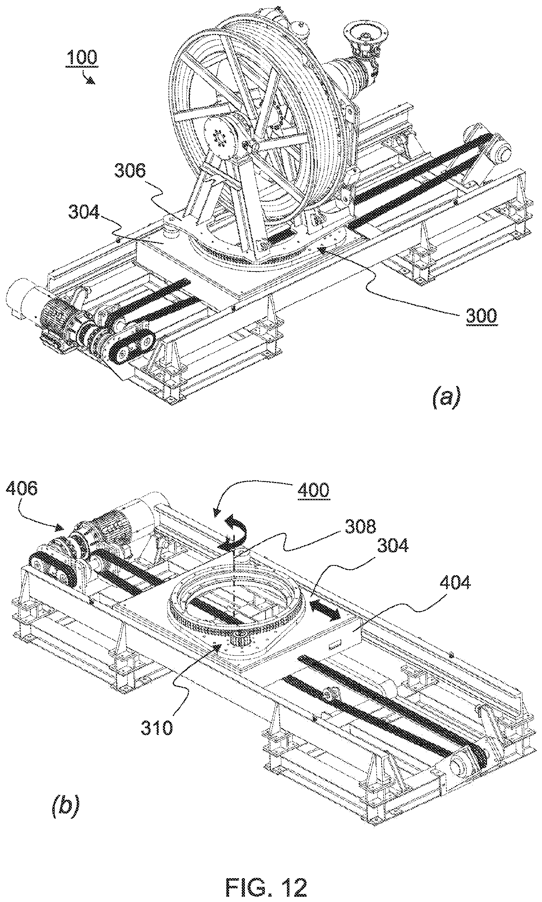

Referring to Figures 12 to 14, a slewing mechanism 300 that is operably coupled with a skidding mechanism 400 is configured to (i) allow the reeling drum 16 to manually orientate to a vessel 12 when in the push-on / stand-off position, (ii) automatically (active or passive) track or follow the vessel 12 when moving due to tidal flow or changes in wind direction, thus, allowing the vessel to "weathervane" around the power station 10, or when the vessel is moving to and from the charging position, and (iii) provide side load protection for the engaged umbilical charging cable 14 during use.

As is illustrated in Figure 12, the slewing mechanism 300 comprises a support platform 304 and a frame platform 306 adapted to receive and support the reeling drum support frame 22. The frame platform 306 is operably (i.e. rotatably) coupled to the support platform 304, so as to allow rotational movement about a rotational slew axis 308 (that is perpendicular to the rotational reel axis 104). A gear mechanism 310 is provided to actively drive the frame platform 306 about the rotational slew axis with a motor (not shown). The motor (not shown) may be activated by the controller in response to signals received from any of the proximity switches 220 provided at the bellmouth 216 of the suspension mechanism 200, or in response to the cable tension measured at the reel drum tension compensator 100.

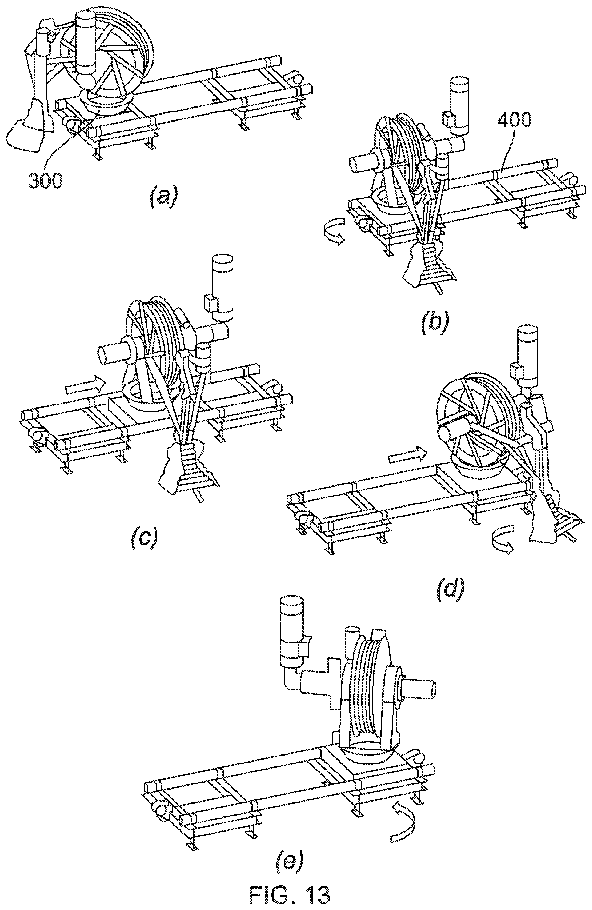

The cooperating skidding (or tracking) mechanism 400 comprises a platform for a rail track 402 mounted to the power station 10 (e.g. wind turbine). A sled or cart 404 is movably coupled to the track 402 and can be driven along the rail track 402 via a motor drive mechanism 406 (see Figures 12 and 13). The motor drive mechanism 406 may be activated by the controller in response to signals received from any of the proximity switches 220 provided at the bellmouth 216 of the suspension mechanism 200, or in response to the cable tension measured at the reel drum tension compensator 100.

The rail track 402 may have any form or shape suitable for a particular range of motion about the power station 10. For example, as shown in Figures 12, 13 and 14(a) and (c), the rail track 402 may be a straight rail (e.g. used for retrofits) where the sled 404 and reeling drum 16 skid/move along a straight line. The straight rail track 402 may be cantilevered to the wind turbine 10, so as to allow the reeling drum 16 move further than the actual footprint of the power station 10 and provide for a greater range of the working angle. Figure 14(c) shows a series of simplified illustrations of the straight rail track 402 and a connected vessel 12 in different following positions.

Alternatively, as shown in Figures 14(b) and (d), the rail track 402 may be in the shape of a horseshoe, or arranged semi-circular or even circular around the power station 10, allowing the reeling drum 16 to move around the power station 10 and providing a greater range of working angle than the straight rail track. Figure 14(d) shows a simplified illustration of a horseshoeshaped rail track 402 and a connected vessel 12 at different positions around the power station 10.

In line with the slewing mechanism 300, the skidding mechanism 400 may be operated in (i) a "manual mode" where the slewing and skidding mechanisms 300, 400 are fully controlled from the vessel, (ii) an "active mode" where the slewing and skidding mechanisms 300, 400 actively follow the vessel movement (controlled by a controller and sensors) so as to maintain the side load or cable tension below a predetermined threshold, or (iii) a passive "follower mode" where both, the slewing and skidding mechanisms 300, 400 are configured to "freewheel" without active control (i.e. around the rotational slew axis and along the predetermined track), so as to simply follow the movement of the vessel 12 by being dragged along by the charging line 14.

### (iv) Vessel connector

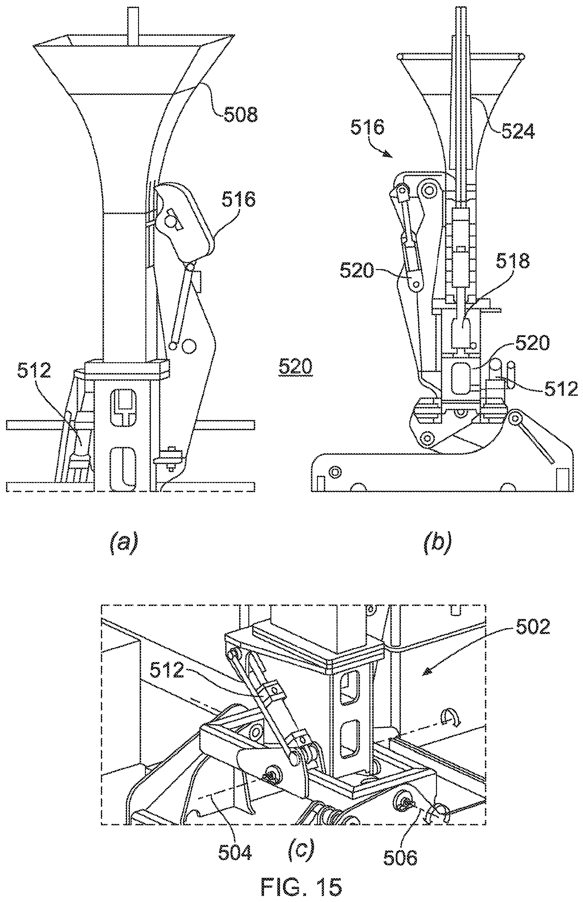

Referring now to Figures 15 to 21, the system of the present invention further comprises a vessel connector system or assembly 500 that is installed on a vessel 12.

The vessel connector system 500 comprises a connector or docking mechanism 510 with an attached bellmouth 508. The docking mechanism 510 and bellmouth 508 are mounted to the vessel 12 via a gimbal mechanism 502 configured to allow the bellmouth 508 and docking mechanism 510 to rotate in two degrees of freedom. Further, the gimbal mechanism 502 includes hydraulic cylinders 512 (coupled with respective accumulators) so as to provide a biased movement about a first gimble axis 504 and a second gimbal axis 506. The biased rotational movement introduces further mechanical dampening (i.e. introduce "elasticity") to the whole adaptive tension compensator system.

As shown in Figure 15(a), the docking mechanism 510 includes a latch 516 and stab 518 mechanism configured to receive and lockingly connect a cable end connector 514 of the charging cable 14, as well as, automatically release the locked cable end connector 514 at a predetermined tension (i.e. the latch 516 will automatically open, if the umbilical cable tension reaches a level dangerous for the equipment). Further, the stab mechanism 518 is provided with guides 526 that ensure correct connection. A control system is adapted to continuously monitor the position of the stab cylinder 522 and the latch cylinder 520 so as to assure correct electrical connection. In case of any unwanted movement or incomplete connection, the controller will stop the charging process.

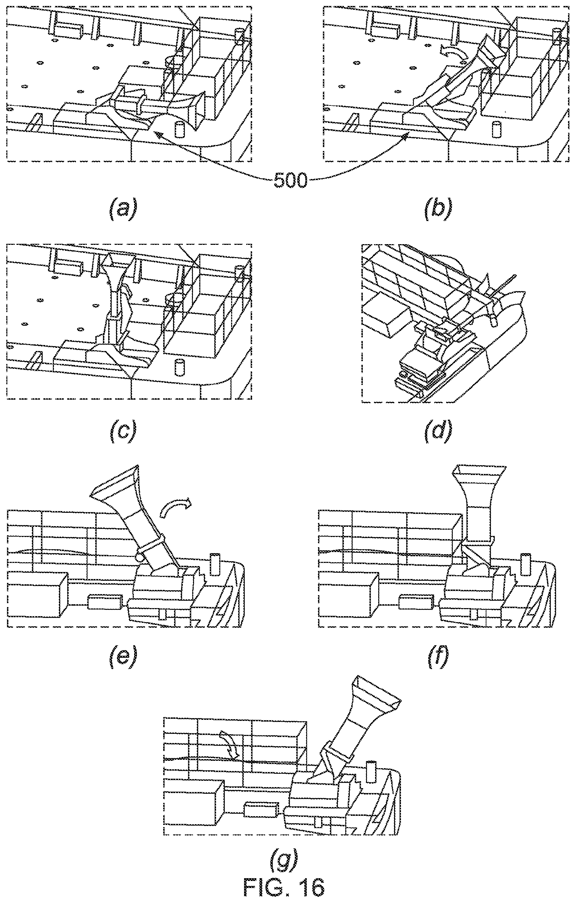

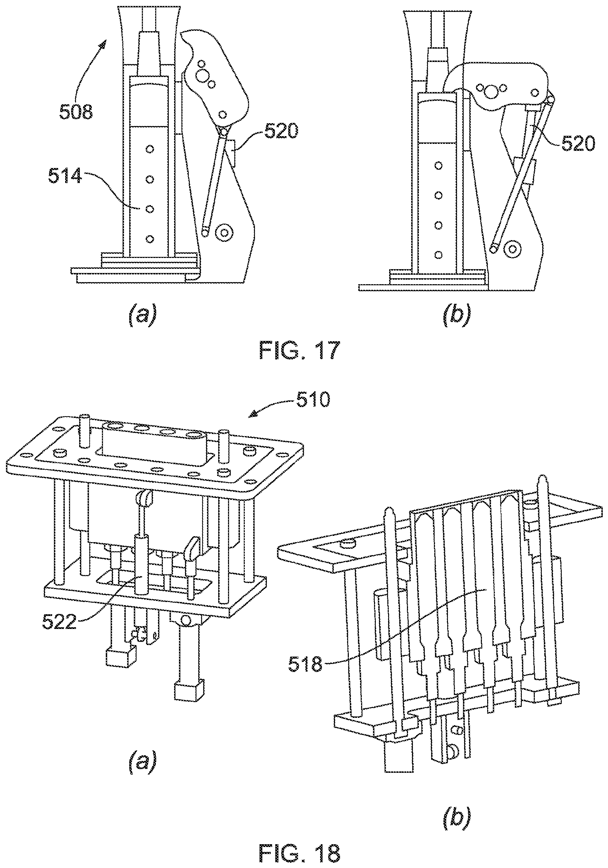

Figure 16 illustrates the degrees of movement (DOF) provided by the gimbal mechanism 502 about its respective first 504 (see Figure 16(a) to (d)) and second 506 (see Figure 16(e) to (g)) gimbal axis. Figure 17 illustrates the latching function (via hydraulic cylinder 520) when securing the received cable end connector 514 to the vessel connector system 500.

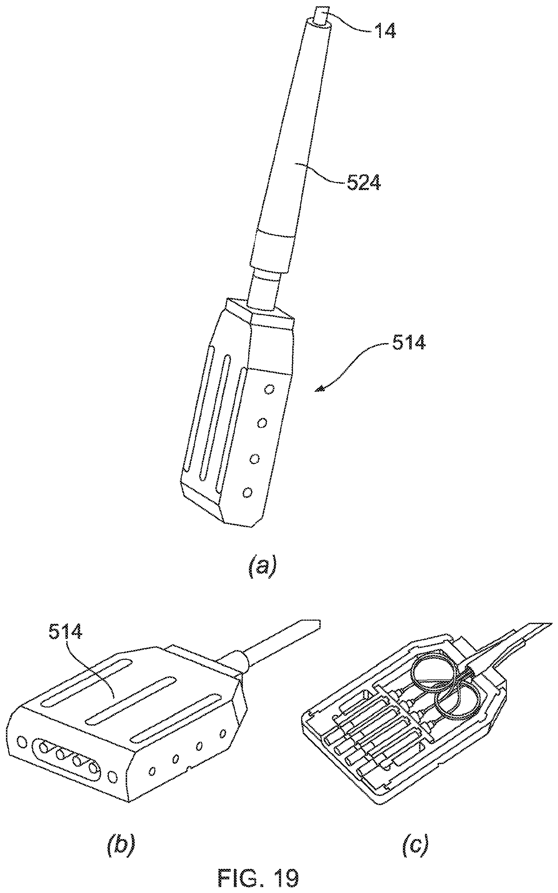

Details of the umbilical cable end connector 514 are shown in Figures 18 and 19. In this example embodiment, the cable end connector 514 is a waterproof electrical connector (enclosure rating of at least IP67), i.e. the connector 514 is self-sealing, has a wet-mateable design and is configured to tolerate submersion into water without damage or requiring intervention after submersion and recovery. Further, the cable end connector 514 is made from light-weight, robust and durable materials and has a scalable design adapted to handle increased powers. A bend stiffener 524 is provided at the distal end of the charging cable 14 to avoid or minimise excessive bending damage when connected to the vessel 12. The cable end connector 514 of this particular example is DC rated up to 950VDC and has a mirrored '+ve' and '-ve' pin arrangement so as to enable connection +/-180° (degrees) without requiring polarity reversal.

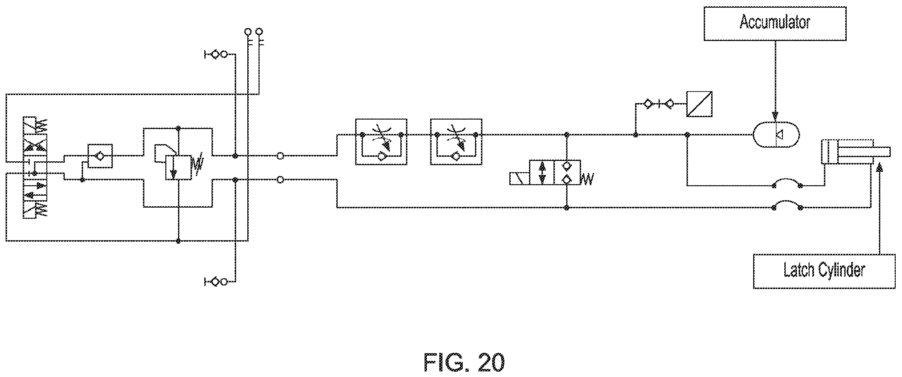

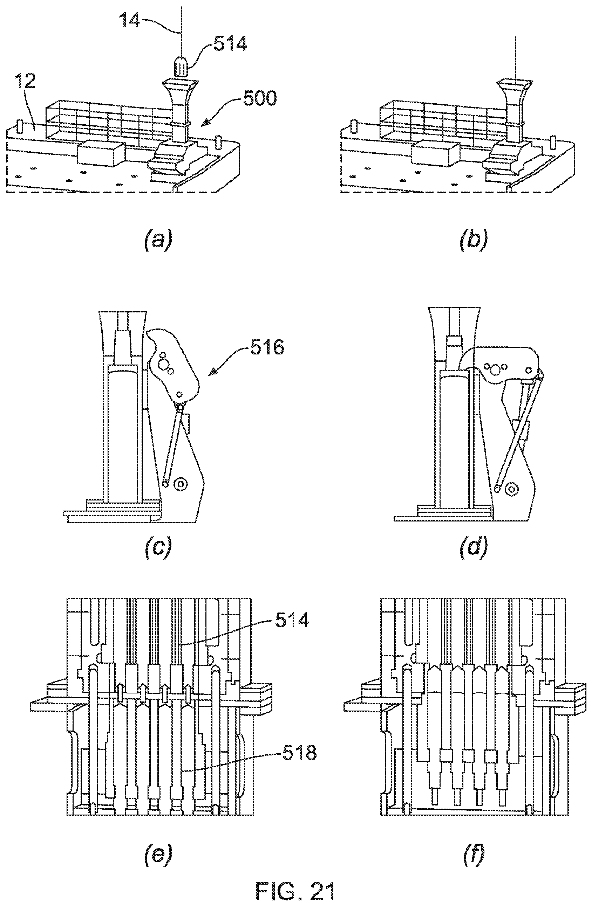

Figure 20 shows a schematic illustration of an example hydraulic diagram of the latch cylinder 520. The mating process between the cable end connector 514 and the vessel connector system 500 is illustrated in Figure 21. In particular, during use (a) the cable end connector 514 is approaching the bellmouth 508 (paid out by reeling drum 16) to then (b) enter the bellmouth 508 (i.e. funnelled in) and connect with the docking mechanism 510, where the latch 516 moves from its open position (c) to its closed position (d), so as to secure the cable end connector 514 to the vessel connector system 500, and (e) ,(f) where the stab mechanism 518 is moved into engagement with respective stab receivers of the cable end connector 514 so as to provide an electrical connection between the vessel connector system 500 and the umbilical charging cable 14.

The vessel connector 500 is further provided with an emergency release function, which is generally a voluntary action initiated by the vessel crew, who have the ability to request an emergency release at whatever stage of the process. It may also be initiated automatically by the controller when a predetermined measure load is reached. The emergency release of this example embodiment is estimated to take about 2.5 seconds from its initiation to full electrical and mechanical disconnection of the cable end connector 514 from the vessel connector 500. In case of a major failure of the control system, even a total loss of power, the emergency release can be triggered by activating a manual release of the vessel connector system 500.

Also, in case of a high (i.e. a predetermined threshold) tension load on the charging cable 14 / cable end connector 514, a passive but automatic mechanical action unlocks the latch mechanism 516, so as to release the cable end connector 514. This is the last resort to maintain the integrity of the equipment and ensure safety to the personnel. The over-load emergency release is adapted to function independently of any controller or power supply. However, while the controller is still operating, it will indicate a warning to the crew that the tension is reaching a high level to then shut down the charging process. Thus, if a predetermined tension load threshold is reached, the controller will simply initiate the ejection of the cable end connector 514.

In the event the controller or power supply fail, the DC switchgear on the vessel 12 will simply default to open the latch mechanism 516, thus, interrupting the charging current on the assumption that the charger cannot be disabled prior to release due to the control system being unavailable. Also, when the controller is unavailable or at fault and the umbilical cable tension increases passed a predetermined safety threshold, the cable end connector 514 is ejected automatically. For that, the pressure on the latch cylinder 520 is higher than the pressure of the accumulator, thus, pushing the oil into the accumulator and retracting the latch cylinder 520 to free the cable end connector 514.

### Example of a charging procedure

Once a vessel 12 is in position at the wind turbine 10, the cable end connector 514 is lowered from the wind turbine 10 under remote control from the vessel bridge and docked into the bellmouth 508 of the vessel connector system 500 where it is secured by the latch 516 and electrically coupled with the stabbing system 518.

Prior to connection and before the vessel 12 approaches the wind turbine 10, the bellmouth 508 is moved into its vertical position in preparation for the cable end connector 514 insertion. Both the cable reeling drum 16 on the wind turbine 10 and the bellmouth 508 of the vessel connector system 500 have several powered degrees of freedom to enable the boat crew to carry out rough alignment of the cable end connector 514 with the vessel 12 before it enters the bellmouth 508. The cable end connector 514 and bellmouth 508 geometry ensure that once the cable end connector 514 is roughly aligned, it can be lowered into the bellmouth 508 where it aligns and orientates itself automatically during docking. The design intent is such that connection and disconnection can be done 'hands free' ,i.e. without the crew having to handle any connectors or cables on deck.

When the cable end connector 514 is docked into the bellmouth 508, it is locked in position by the latch mechanism 516. This is powered from a small electrically operated HPU on the rear of the vessel connector system 500. The HPU may be located inside the vessel 12 in a machinery space and may even be shared with the vessel crane for economy.

In the next step, a pair of hydraulic 'stabbing' cylinders move upwards to electrically mate with the cable end connector 514. The vessel 12 is now connected electrically and mechanically to the wind turbine 10, although power remains isolated until the vessel 12 reaches the mooring and charging position.

At this stage, the vessel 12 pulls away from the wind turbine 10 with the reeling drum 16 automatically paying out the umbilical charging cable 14 (i.e. under constant tension control). If necessary, the reeling drum 16 can be controlled in other modes (see earlier sections), for example, "manually" or in "position control", whereby the reeling drum 14 follows the vessel 12 position relative to the wind turbine 10. As the vessel 12 moves away from the wind turbine 10, the bellmouth 508 is lowered towards a horizontal position, either manually or automatically, to ensure that the cable load path is kept substantially straight. When the vessel 12 has reached its dedicated mooring and charging position, power can be "fed" to the vessel's battery storage or to simply provide an alternative power source for the vessel main electrical network.

The bellmouth 508 is mounted on the gimbal mechanism 502 that can be hydraulically operated or left to move in 'float mode' (passive movement). This allows the vessel 12 to take up a natural position relative to the wind turbine 10 whilst keeping the umbilical load path as straight as possible so as to avoid excessive bending of the cable 14 when under tension. In this example embodiment, the vessel connector system 500 is located fully forward along the vessel centreline and recessed such that its top is flush with the vessel deck, allowing personnel to transfer over it unobstructed.

Also, as described previously, an emergency release system is provided at the vessel connector system 500 to disconnect the vessel 12 in the event of an emergency or a high-tension condition due to increasing weather conditions and where normal disconnection is not possible. This can be activated manually by the crew using a push button on the bridge, or automatically by the control system when the system is approaching its safe working load and is predicted to move into overload. Also, the disconnection can be activated passively in case control and safety systems or power fail. In effect, this provides both a Manual and Automatic Overload Protection System (MOPS/AOPS) similar to an offshore lifting appliance. In the event of failure of power or control, a passive release system (discussed in a previous section) is provided to unlock and eject the cable end connector 514. During emergency release, the power is disconnected prior to the cable end connector 514 "unmating" or disconnecting.

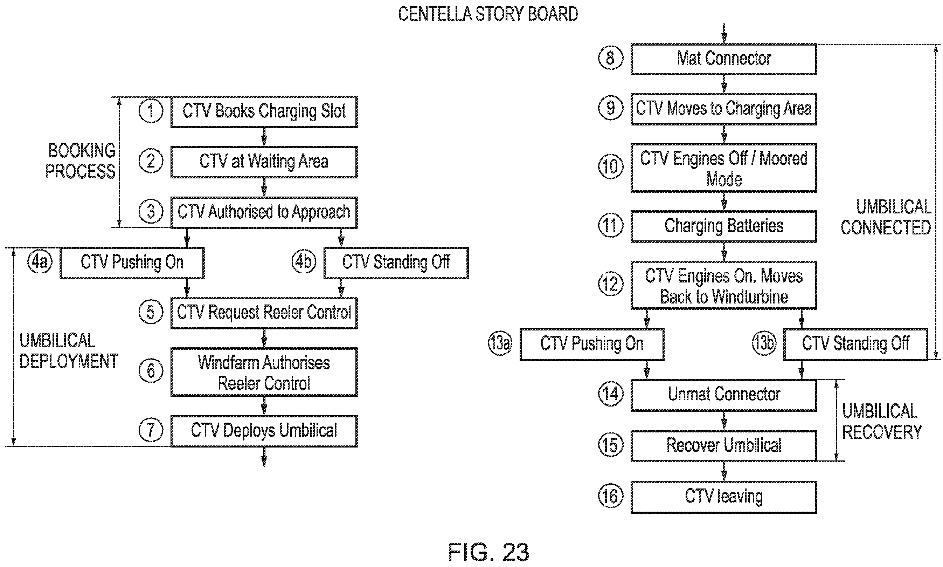

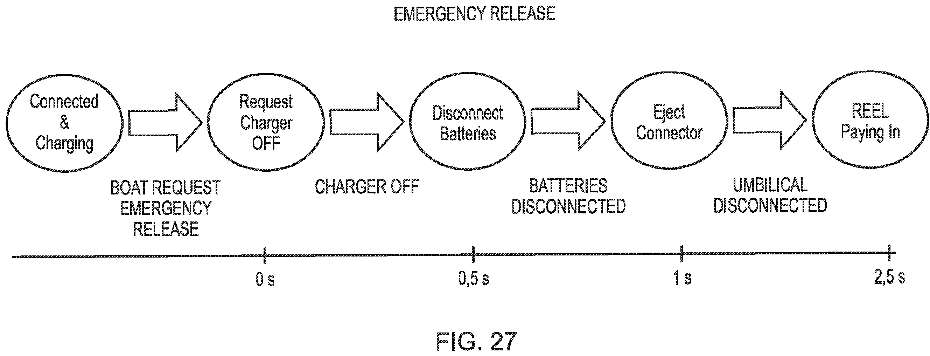

Further detailed steps of the charging process, working modes, communication protocols (WiFi, Internet, cloud) between the power station 10 and the vessel 12, operator interfaces, as well as, the booking procedure are described in more detail in the Appendix section with reference to the storyboards and schematics illustrated in Figures 23 to 32.

A schematic diagram of the power system with the vessel 12 connected to the power station 10 via a charging cable 14 is shown in Figure 22.

### Optional Active Heave Compensation (AHC)

The system of the present invention may be equipped with an Active Heave Compensation (AHC) system. AHC can be used, if needed when (i) the vessel is pushing on, or (ii) the vessel is standing off. In normal circumstances AHC will not be needed whilst pushing on, since vertical movements of the vessel 12 will be minimal. But, when pushing on is not possible, AHC will be needed to compensate for the heave movement of the vessel 12 during the docking of the cable end connector 514 and the mating process with the docking mechanism 510 of the vessel connector 500. Here, a Motor Reference Unit (MRU) will be located at the vessel 12 using a wireless link to send vessel motion to the reeling drum 16. The system controller may utilise XWave^{™} control software, a fully proven AHC control system platform, developed and patented by MJR with several applications already in the field (see EP3303204B1).

Automatic motion compensation of the bellmouth 508 may also be provided, together with a supplementary guidance system to ensure that the connector can be inserted into the bellmouth when the boat is standing off and not pushed on. In this case the controller may be equipped with a basic dynamic positioning system that will automatically hold the vessel in position beneath the reeler in all normal weather conditions using the vessel propulsion system to enable the connector to be aligned and inserted.

### Optional Energy Management System

The system of the present invention may also be equipped with an energy management system as described in UK patent GB2571267 The inclusion of such a system will provide a self-sustaining energy source (e.g. harvested from wave energy).

It will be appreciated by persons skilled in the art that the above embodiment(s) have been described by way of example only and not in any limitative sense, and that various alterations and modifications are possible without departing from the scope of the invention as defined by the appended claims. Various modifications to the detailed designs as described above are possible, for example, variations may exist in shape, size, arrangement (i.e. a single unitary components or two separate components), assembly or the like.

**Reference numbers**

| | | | |
|---|---|---|---|
| 10 | Wind Turbine power station | 204 | Upper arm position |
| 12 | Vessel | 206 | Lower arm position |
| 14 | Umbilical cable | 207 | Second elastic energy storage system |
| 16 | Reeling drum | 208 | hydraulic cylinder |
| 18 | Motor | 210 | Second accumulator |
| 20 | Motor shaft | 212 | rotational arm axis |
| 22 | Reeling drum support frame | 214 | Spooler |
| 24 | Cable end portion | 216 | Bellmouth |
| 26 | first bearing | 218 | encasing rollers |
| 28 | second bearing | 220 | Proximity switches |
| 30 | third bearing | 222 | spooler motor |
| 32 | motor housing | 300 | Slewing mechanism |
| 100 | Reel drum tension compensator | 304 | Support platform |
| 102 | Motor hub coupling or flange | | member 306 frame platform |
| 104 | rotational reel axis | 308 | rotational slew axis |
| 106 | Reel hub coupling or flange member | 310 | gear mechanism |
| 108 | Coupling mechanism | 400 | Skidding mechanism |
| 110 | First angular position | 402 | rail track |
| 112 | Second angular position | 404 | Sled or Cart |
| 114 | First elastic energy storage system | 406 | Motor drive mechanism |
| 116 | First accumulator | 500 | vessel connector system |
| 118 | Hydraulic cylinder | 502 | Gimble mechanism |
| 119 | Piston rod | 504 | First gimble axis |
| 120 | Gear mechanism | 506 | Second gimble axis |
| 122 | Stopper assembly | 508 | Bellmouth member |
| 124 | Contact element | 510 | Docking mechanism |
| 126 | Surface element | 512 | Hydraulic cylinder |
| 128 | reel hub link member | 514 | cable end connector |
| 130 | cylinder barrel | 516 | Latch mechanism |
| 132 | moto hub link member | 518 | Stab mechanism |
| 134 | bevel gear | 520 | latch cylinder |
| 136 | planet gear | 522 | stab cylinder |
| 200 | Cable suspension mechanism | 524 | bend stiffener |
| 202 | Suspension arm | 526 | guides |

### APPENDIX

Figure 23 shows the main steps of the standard Centella CTV charging process. This sequence is common to all the of the Centella range of products. Table 1 below, shows a detailed description of each step of the storyboard defined in Figure 23:

**Table 1**

| **No.** | **Name** | **Description** |
|---|---|---|
| 1 | CTV Books Charging Slot | The CTV must book a charging slot in advance before approaching Centella, for that the CTV must use its 4G connection to access the MJR application cloud to request a charging slot. |
| | | In case 4G communication is down, the windfarm operator could approve charging via regular radio communication and use the MJR application cloud to indicate Centella charger that CTV is authorised to charge. |
| 2 | CTV at Waiting Area | CTV must wait at a safe area away from the Centella charger until the windfarm, via the MJR application cloud or via radio, allows the CTV to approach. |
| 3 | CTV Authorised to Approach | Once the Centella charger is ready to accept a new CTV for charging, the windfarm operator will allow one of the waiting CTVs to approach the Centella charger. |
| | | The windfarm operator can follow the booking order or give priority to any CTV considered to have more priority or urgency in charging. |
| 4a | CTV Pushed On | When possible, the CTV will push on against the OWT. This is the base case for the prototype test. |
| 4b | CTV Standing Off | When push on is not possible, due to weather conditions or because there is no suitable mechanical structure to push on to (which may be the case when installing Centella on a substation), the CTV will stand in position under the Centella reeler and an active heave compensation will enable safe connection and disconnection of the CTV. |
| 5 | CTV Requests Reeler Control | Once the CTV is in position, whether pushing on or standing off, it must request and take control of the Centella reeler. The base case for the design approach is that the CTV will always have control of the process to ensure that the safety of the Vessel is under control of the crew at all times. |
| 6 | Windfarm Authorises Reeler Control | The windfarm control room application is used by the windfarm operators to confirm [via the MJR application cloud] to the offshore charging system which CTV has been authorised to approach it and take control of the reeler. |
| 7 | Deploy Umbilical | Once the CTV has control over the Centella reeler, via the wireless link, it is able to control drum movements, skid position and slew angle and selecting working mode for umbilical control and skid/slew control. |
| | | Therefore, the CTV crew will place the reeler, skidding and slewing where needed, and deploy the umbilical until the connector enters the connection point at the Vessel bellmouth. |
| 8 | Mate Connector | For personnel safety, the process of mating the connector is a locally unmanned process, remotely controlled by the CTV crew from the CTV bridge. Although it may be controlled locally from deck via a local control pendant for maintenance or emergency use cases. |
| | | Once the connector enters the CTV connector bellmouth, detected by a proximity sensor, the system will wait for the CTV crew command to start mating the connector. |
| | | The connector has an automatic over-tension release, that frees the CTV from the umbilical if the umbilical tension reaches a dangerous level. |
| 9 | CTV Moves to Charging Area | Once the connector is mated, the CTV will move to the charging area, which is estimated to be around 50 meters away from the OWT. |
| | | The reeler will be in following mode, keeping control of the umbilical catenary. |
| 10 | CTV Engines Off / Mooring Mode | Once the CTV gets to the charging area the reeler will change to mooring mode, on which, the umbilical acts as the mooring line keeping the CTV in position. |
| | | Once the CTV is happy with the mooring and connector, it must request to start charging. |
| 11 | Charging Batteries | The Centella charger will follow the charging profile of the batteries. Depending on the CTV, Centella can be connected either directly to the batteries, or indirectly to the batteries via the CTV common DC bus. For charging the batteries when connected to the CTV common DC bus. |
| | | The CTV has the ability of stopping or pausing the charging at whatever moment, otherwise charging will continue until batteries are fully charge. |
| | | Centella will always have direct communication to the battery system to check health and charging level. |
| 12 | CTV moves back to WT | Once charging is complete the CTV moves back to Centella by approaching the OWT (or OSS). During this operation the reeler is in following mode to keep control of the umbilical catenary. |
| 13a | CTV Pushed ON | When possible, the CTV will push on to the OWT (or OSS). This is the base case for the prototype test. |
| 13b | CTV Standing Off | When push on to the OWT (or OSS) is not possible, due to weather conditions or because there is no mechanical structure to push on to, the CTV will stand under the reeler. The reeler has active heave functionality to compensate for the CTV heave movement. |
| | | Note: As part of this project, MJR is developing a low-cost DP system for CTVs, which will allow this operation. |
| 14 | Un-mate Connector | Once the CTV is happy with the Vessel and umbilical status, it can request to un-mate the connector, which will disconnect the umbilical from the Vessel. |
| 15 | Umbilical Recovery | Once the connector is un-mated, the CTV will request to recover the umbilical, this is an automatic process that recovers fully the umbilical and places the reeler at rest position. |
| 16 | CTV leaves | CTV leaves the charger area. |

### Catenary Control

The umbilical charging cable 14 provides for:
- Transmission of energy from the charger to the CTV batteries.
- CTV mooring line.

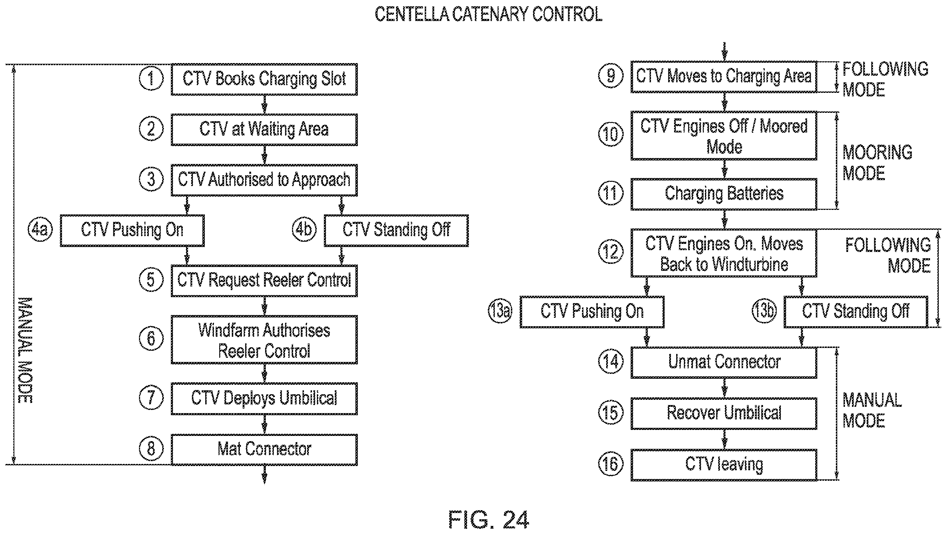

The umbilical cable tension is controlled by the reeling drum, and depending on the particular part of the process, the reeler will act differently to achieve the umbilical catenary and tension needed. Figure 24 shows the catenary control status related to the main sequence steps.

**Table 2**

| **Umbilical Mode** | **Description** |
|---|---|
| Manual Mode | This mode is used to give the CTV crew full control of the catenary shape by manual control [via wireless link] of the reeler and skid/slew functions. In this mode, the passive drum and arm compensators are still active, also the drum electrical drive motor will have a torque limit to protect the umbilical from over tension. |
| Following Mode | Centella reeler will automatically control the catenary of the umbilical, always keeping a minimum tension to avoid unwanted slack while the Vessel is moving. |
| Mooring Mode | The umbilical acts as a mooring line. The reeler keeps its electrical drive motor at zero speed with the brake off, leaving the passive compensators to reproduce a similar elasticity to a standard mooring rope. This reduces and controls the peak tensions in the mooring to avoid damage to the vessel, connector, umbilical, reeler and OWT. |
| | The passive compensators are calculated to be sufficient for the normal operating weather range of the system. In case of weather deterioration when the Vessel is connected leading to conditions that exceed the nominal operating limits of the system and where the passive compensation is not adequate and begins to saturate, the drum electrical drive motor will help to keep umbilical tension within limits until the Vessel can disconnect safely. |

Figure 24 shows the recommended umbilical control mode in each step, however the CTV crew always has the ability to select the umbilical control mode - for example, it will be possible to have the umbilical control in speed mode having the CTV controlling the umbilical catenary when the vessel is moving to/from the charging area.

Passive tension compensation, used for mooring mode, is achieved in three stages as described in below:

### Slewing and Skidding mechanism

Centella's slew & skidding systems covers three main functionalities:
- Allows the reeler to manually orientate to the CTV push on / standoff position.
- Automatically follows the CTV when moving due to tidal flow /wind direction changes to allow the CTV to 'weathervane' around the OWT, or when CTV is moving back/from charging area.
- Provides umbilical side load protection.

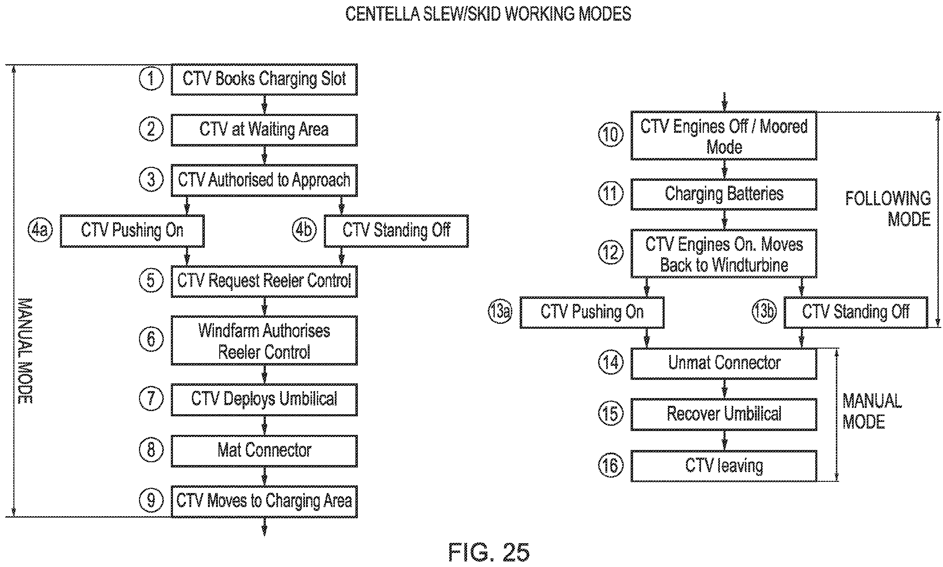

In order to achieve the three functionalities, the systems slew & skidding has two working modes. Figure 25 shows which working mode is active on each step of the charging process.

**Table 3**

| **Umbilical Mode** | **Description** |
|---|---|
| Manual Mode | This mode is used to give the CTV the ability to move slew and skid in speed mode from the control system of the Vessel. This mode is normally used to orientate the bellmounth to the Vessel connection point. |
| Following Mode | In this mode the reeler will automatically follow the CTV making a 360° (*) rotation of the Vessel possible around the OWT with the umbilical connected. (*) Full rotation of the CTV around the OWT is only possible with the circular rail variant of Centalla. With the linear cantilever rail system in the prototype, rotation will be limited to around 270° only. |
| | In order to move the slew, the reeler uses two proximity switches located in the bellmouth, those sensors detect the side load in the umbilical, see figure 7 below. Once, one of the side load proximity sensors is activated the slew will rotate until the proximity sensor disappear. Once the slew gets to a determine angle, the skidding function start moving. |

Figure 25 shows the recommended skid/slew control mode on each step, but the CTV crew will always have the ability to select the control mode, for example it will be possible to have the skid/slew control in speed mode, having the CTV controlling the umbilical catenary when the Vessel is moving to the charging area or back to the OWT.

Depending on if the system is going to be installed on an existing OWT, where modifying the platform is not possible, or it is going to be installed on a new OWT, where there is more flexibility to do platform modifications, the skidding may have two configurations.

### Connection Sequence

**Table 4**

| Number | Name | Description |
|---|---|---|
| 1 | Umbilical Approaching Vessel bellmouth | While paying out the reeler [commanded by the CTV] the umbilical approaches the Vessel bellmouth. |
| 2 | Connector at Latch Position | Once the connector reaches the latch position, detected by a proximity switch, the system waits for the CTV crew to authorise, via the control system, mating of the connector. |
| 3 | Latch and Stab Connector | Once the CTV crew authorises it, the connector first gets latched and afterwards stabbed, all in an automatic sequence. |
| 4 | Bellmouth in Working Mode | When the umbilical is physically linked to the Vessel, the Vessel bellmouth must be controlled to avoid equipment damage. Section below describes Vessel bellmouth working modes. |

### Vessel Bellmouth Working Modes:

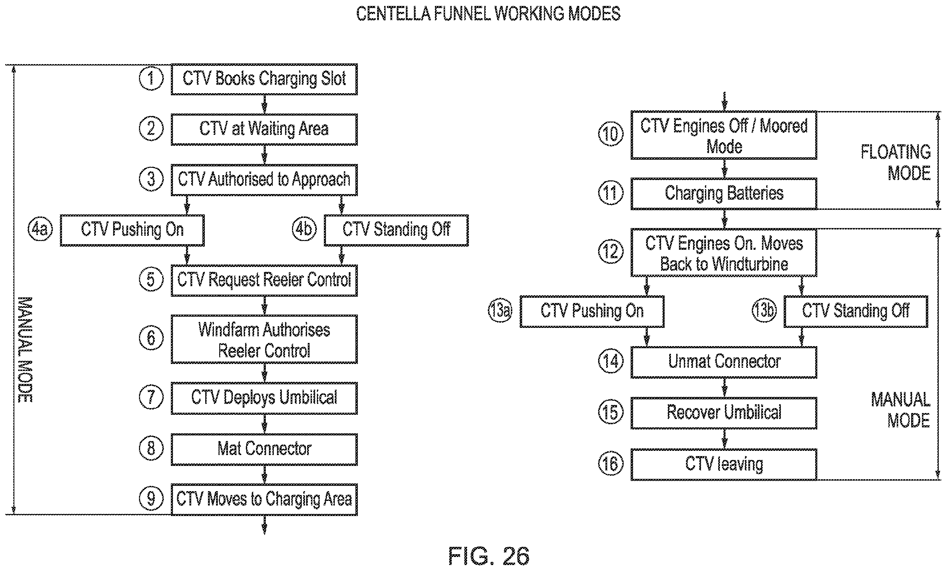

The Centella Vessel bellmouth has two working modes. Figure 26 shows which working mode is active on each step of the charging process.

**Table 5**

| Working Mode | Description |
|---|---|
| Manual Mode | This mode is used to give the CTV crew the ability to move the Vessel bellmouth in speed mode to whatever position is needed whilst the Vessel is moving to/from the charging area. While in manual mode the bellmouth is protected from excess tension via a counterbalance valve that will release if over tension happens. |
| Floating Mode | In this mode bellmouth gimbal cylinders are connected to a hydraulic accumulator that provides mechanical damping against tension and side load, acting as another passive compensator. |
| | Floating mode is the default working mode - whenever the control system is not healthy, the Vessel bellmouth will be in floating mode, protecting passively the umbilical and equipment. |

### Charging Modes

The present offshore charging system can be used in two different modes:
- *Connected directly to the CTV batteries.*
- *Supplying DC energy to the common DC system of the vessel.*

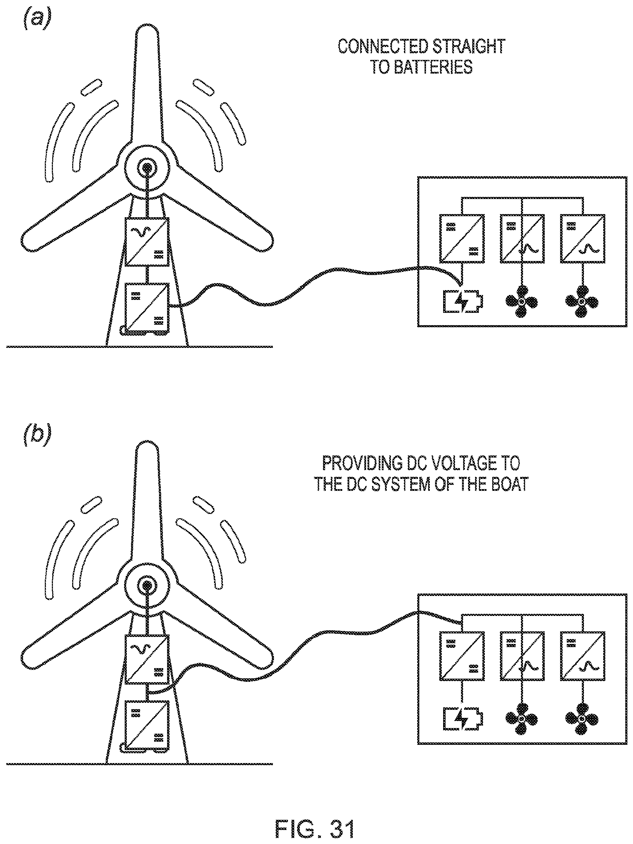

Figure 31 (a), (b) shows both charging methods. When the charging system is connected directly to the batteries, the DC-DC converter in the charger is responsible for following the battery charging profile, for that the charger must have communication with the battery BMS.

When the charging system is connected to the common DC bus of the vessel, the charger is only providing the DC supply and the DC-DC converter that is part of the vessel system controls battery charging. In this case the charger also needs comms with the BMS to know battery state of charge. Both charging methods have pros and cons, Centella is capable of providing all functionality and electrical protection needed for both.

The system is designed to provide DC power at a voltage that is compatible with the vessel electrical and propulsion system and is configurable to cover the necessary common DC bus and battery voltage range that would be commonly found on vessels of this type. Also, for high powers the umbilical and connector will be provided with a water-cooling system

### Vessel and OWT Control Systems

The vessel and OWT have two independent and self-sufficient control systems allowing the vessel and OWT to always be in full of control of their respective side whether there is a communication link between them or not. This enables the umbilical, connector, vessel, batteries and reeler to be protected at all times.

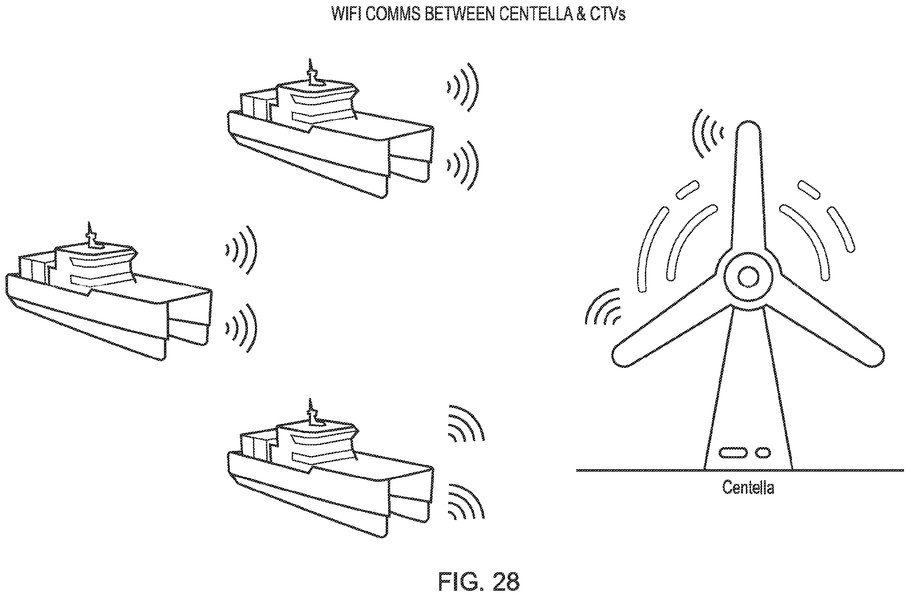

A redundant wireless link is implemented between vessel and OWT. Each vessel control system has a unique identifier that makes it possible for the OWT to identify and authenticate the vessel that is connected to it and to provide the reeler and charger control only for that authenticated vessel. Figure 28 shows a simplified representation of the wireless link between vessel and OWT.

**Table 6**

| | **Functionality** | **Description** |
|---|---|---|
| Vessel Control System | Mate / Un-Mate Connector | The vessel controls the mating/un-mating of the umbilical connector. |
| | Emergency Release | The vessel control system can emergency release the connector after a crew request. |
| | Request Catenary Control Working Mode | The vessel, via the wireless link, can request working mode for the umbilical catenary control - manual, following or mooring. |
| | Request Skid/Slew Working Mode | The vessel, via the wireless link, can request working mode - slew/skid, manual or following. |
| | Command Reeler via Wireless Link | Once the OWT gives permission, the vessel can drive all functions of the reeler manually when in manual mode. |
| | Electrical Connection/Disconnection Umbilical from Batteries | The vessel has the ability to electrically disconnect or connect the batteries from the umbilical when charging is not safe. |
| | Batteries System Status | The vessel control system is responsible for the communications and electrical protection of the vessel battery system, not allowing charging if system is not healthy. |
| | Request Start/Stop Charging Batteries | The vessel, via the wireless link, is the responsible for requesting start or stop of the battery charging process. |
| OWT Control System | Catenary Control | Manage the reeler motor and compensations to achieve the catenary control requested. |
| | Skid/Slew | Manage the reeler skid and slew systems to achieve the working mode requested. |
| | Charger Control | Manage the charger system. |
| | Electrical Connection / Disconnection of Umbilical from Charger | The OWT has the ability to electrically disconnect or connect the charging from the umbilical when charging is not safe. |
| | Electrical Protection | The vessel control system checks the health of the charger and umbilical electrical system blocking charging if something in not heathy. |

### Vessel Operator Interface Control System.

**Table 7**

| **Interface** | **Description** | |
|---|---|---|
| 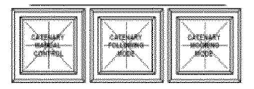 | Catenary mode selection and indication, | |
| | | ❖ Catenary Manual Control: Pushing this illuminated push button requests manual mode. When manual mode is activated it will be lit. |
| | | ❖ Catenary Following Control: Pushing this illuminated push button requests following mode. When following mode is activated it will be lit. |
| | | ❖ Catenary Mooring Control: Pushing this illuminated push button requests mooring mode. When mooring mode is activated it will be lit. |
| 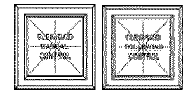 | Slew/Skid mode selection and indication, | |
| | | ❖ Slew/Skid Manual Control: Pushing this illuminated push button requests manual mode. When manual mode is activated it will be lit. |
| | | ❖ Slew/Skid Following Control: Pushing this illuminated push button requests following mode. When following mode is activated it will be lit. |
| 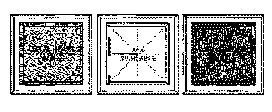 | AHC selection and indication, | |
| | | ❖ Active Heave Enable: Pushing this illuminated push button requests AHC mode. When AHC is activated it will be lit. |
| | | ❖ Active Heave Available: Indication of when AHC can be activated. |
| | | ❖ Active Heave Disable: Pushing this illuminated push button requests AHC mode off. When AHC is deactivated, it will be lit. |
| 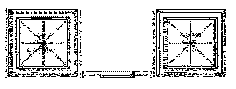 | Vessel Bellmouth selection and indication, | |
| | | ❖ Gimbal Manual Control: Pushing this illuminated push button requests manual mode. When manual is activated it will be lit. |
| | | ❖ Gimbal Float Control: Pushing this illuminated push button requests floating mode. When floating is activated it will be lit. |
| | Manual movements of: | |
| | | ❖ Reeler: Pay in/out. Slew clockwise/anticlockwise. Skid In/out |
| | | ❖ Vessel Bellmouth: Fore/Aft. Stb/Port. Latch/Unlatch. Stab/Unstab |

### Booking, Windfarm & Vessel Operator App

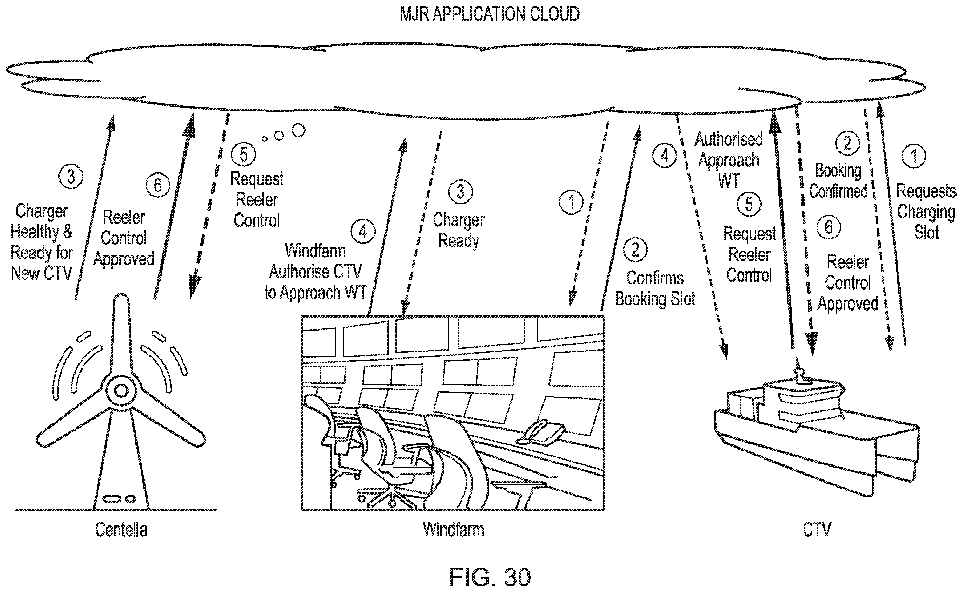

Above the OWT, vessel and windfarm control system sits the MJR Application Cloud, which is the user portal to the process. The Vessel will use a 4G link to always have comms with the cloud whereas windfarm and OWT are likely to be connected via the array cable fibre optic infrastructure, with 4G when fibre is not available. Figure 30 shows a simplified representation of MJR cloud architecture.

**Table 8**

| | Functionality | Description |
|---|---|---|
| CTV | Book Charging Slot | Before approaching the charger, the CTV crew must book a charging slot through the MJR cloud. |
| | Online Chat with Windfarm | It is possible to hold an online chat with the windfarm operator. |
| | Visualise Estimated Waiting Time to Charge | The CTV will have visibility of the waiting list for the charger |
| | Visualise Charger and Reeler Status | The CTV will know through the MJR cloud the current status of a particular charger. |
| | Receive Windfarm Authorization to approach OWT. | The windfarm will indicate through the MJR cloud when a CTV is allowed to approach and take control of the charger |
| Windfarm | Manage Booking System | Windfarm operator has the ability of approve or reject booking request as well as vary the booking order when needed. |
| | Online Chat with CTVs | It is possible to hold an online chat with any CTV around the charger. |
| | | |
| | Authorise CTV to Approach | The windfarm operator selectings what CTV is authorised to approach the charger. |
| | Visualise Charger and CTV Battery Status | The OWT has the ability to visualise the current status of charger as well as battery charger level of any CTV. |
| OWT Charger | Check if CTV is authorised to take control of the reeler | The OWT charger needs to know what CTV is allowed and when to take control of the reeler and charger. |

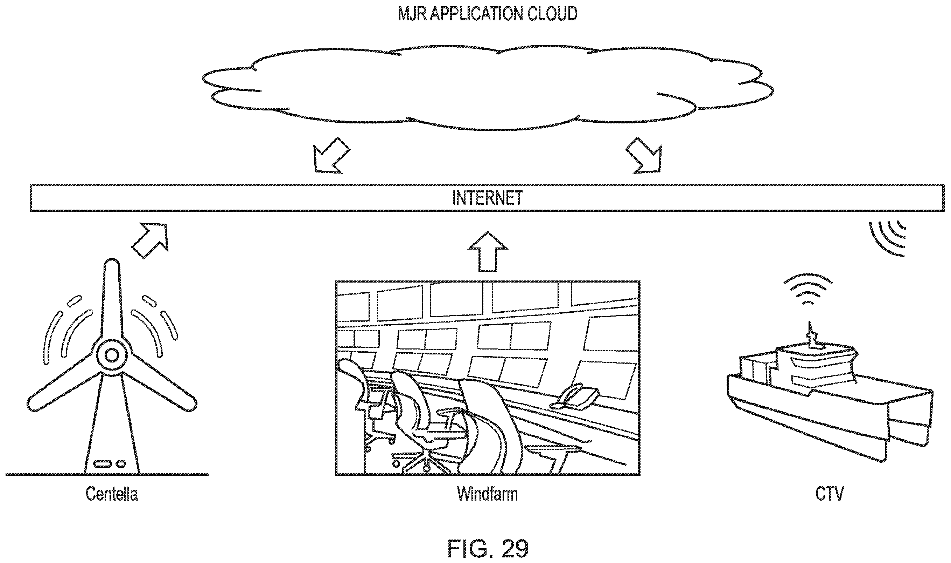

Figure 29 / Table 8 do not show the Vessel operator application, which is also linked to the MJR application cloud and which functionality is to show the vessel operator the vessel information such as charging processes completed, battery levels, analytics, billing information and all other useful metrics and data. Figure 30 shows the communication flows that cover step 1 to step 6 of the storyboards from Figure 23 to 25.

Further, in Figure 30, solid lines represent messages to the MJR Application Cloud and dashed lines represent messages coming from the MJR Application Cloud to one of the systems.

### Datalogger/Database

A datalogger/database is provided in the MJR Application Cloud that continuously logs relevant data from the chargers, windfarms and CTV. The datalogger serves analytic data to the windfarm and Vessel operators allowing to them to have access to an extensive dataset, example below:

**Table 9**

| | Data | Description |
|---|---|---|
| Windfarm | Number of Charges Completed | Total number of charging process done per charger. |
| | Charging Power/Energy | Average power per charging and total power |
| | Fiscal Metering Data | Energy transferred to particular vessels |
| | Authorise CTV to Approach | The windfarm operator selects which CTV is authorised to approach the charger. |
| | Visualise Charger and CTV Battery Status | The OWT has the ability to visualise the current status of charger as well as battery charger level of any CTV. |

### Umbilical Protection

The umbilical is always protected against over tension and side load, that could damage the umbilical itself or put in risk the integrity of the reeler, OWT or CTV. The system also, in automatic modes, monitors and controls the umbilical slack.

### Active Compensation:

The active compensation system depends upon power being available and the reeler control system, drum drive motor and variable speed drive being fully operational.

### Drum Motor:

When the catenary control is in following or mooring mode, the drum motor actively keeps the umbilical tension within limits, helping the passive compensation system if needed. To monitor the tension the control system uses a load cell and the stroke and pressure of the passive compensation cylinders a feedback.

### Electrical Protection

Electrical protection of the system is provided both at the charging side (OWT) and also at the vessel side (CTV) and is designed to be compliant with DNVGL-RU-SHIP Pt.4 Ch.8 Electrical installations as follows:

### Charger AC Feeder:

**Table 10**

| Protective Function | Action | Location | Description |
|---|---|---|---|
| Overcurrent | Automatic disconnection | AC feeder from the OWT to the charging converter | Protects the upstream supply from downstream overcurrent and short circuit faults and ensures upstream selectivity/discrimination |
| Short circuit | Automatic disconnection | | |
| Insulation Resistance | 1^{st} stage warning, 2^{nd} stage trip | | Where a galvanic isolation transformer is provided between the OWT and charging converter, insulation resistance monitoring is provided at the secondary side |
| Under Voltage | Trip | | Trips the charge converter when AC supply is out of limits |
| Over Voltage | Trip | | |
| Under Frequency | Trip | | |
| Over Frequency | Trip | | |
| Note that the above protective functions are in addition to the general inbuilt protective functions of the charge converter | | | |

### Charger DC Output

**Table 11**

| Protective Function | Action | Location | Description |
|---|---|---|---|
| Overcurrent | Automatic disconnection | DC output from charging converter to | Protects the umbilical and connector from DC side faults |
| Short circuit | Automatic disconnection | umbilical and connector | |
| Insulation Resistance | 1^{st} stage warning, 2^{nd} stage trip | | |
| Conductor Resistance | 1^{st} stage warning, 2^{nd} stage trip | Connector (umbilical and vessel) | Monitors the connector make up resistance by measurement of volt drop across connector on load to determine connector resistance |
| Note that the above protective functions are in addition to the general monitoring of the battery state of health provided by the BMS which are used by the system to control battery charging and to ensure battery safety. For example battery cell high temperature/cell imbalance etc. | | | |

### Connector System

**Table 12**

| Protective Function | Action | Location | Description |
|---|---|---|---|
| Connector differential movement | Automatic disconnection | Vessel and charger | Monitors the connector position when made up to anticipate emergency release on high umbilical tension. Automatically disables charger output and also interrupts DC connection to battery (via DC switchgear on vessel) to guarantee that connector is never unmated on load |
| In general the battery and vessel is protected from the charging side via data communications link from the vessel to the OWT. However in the event of communications failure between the vessel and the OWT the vessel has its own protective functions to ensure battery safety and that the connector is not released prior to interruption of charging current. | | | |

**Table 13**

| **Step** | **Description** |
|---|---|
| Request ER | The CTV has the ability of request an emergency release at any time. |
| Stop Charger | The first step of the ER is to stop the battery charger which will stop energy transfer through the umbilical. |
| Electrical Disconnection | The umbilical will be electrically disconnected from the charger and batteries using DC contactors on both sides of the umbilical |
| Eject Connector | Once the umbilical has been electrically disconnected the connector will be ejected. Since the umbilical is used as mooring line, it could be under tension at the moment of the ER, to avoid any potential damage to any equipment or personal, the connector will be fully guided and protected until is overboard. |
| Umbilical Recovery | Once the connector is free from the Vessel the reeler will pay in at maximum speed to avoid the connector touching the seabed or OWT foundation. |

### Failure Modes Overview

A separate FMECA has been developed within the system design process to inform the design and ensure that any failure modes with high criticality are adequately mitigated.

The result of this is that Centella is always capable of:
- Disconnecting and releasing the CTV from the system in an emergency situation
- Protection of the umbilical, connector, CTV, reeler and OWT from mechanical overload with the use of a passive compensation and passive release philosophy
- Electrical protection of the umbilical, connector, CTV, reeler and OWT by means of approved hardware protective devices

### Vessel Booking System Interface

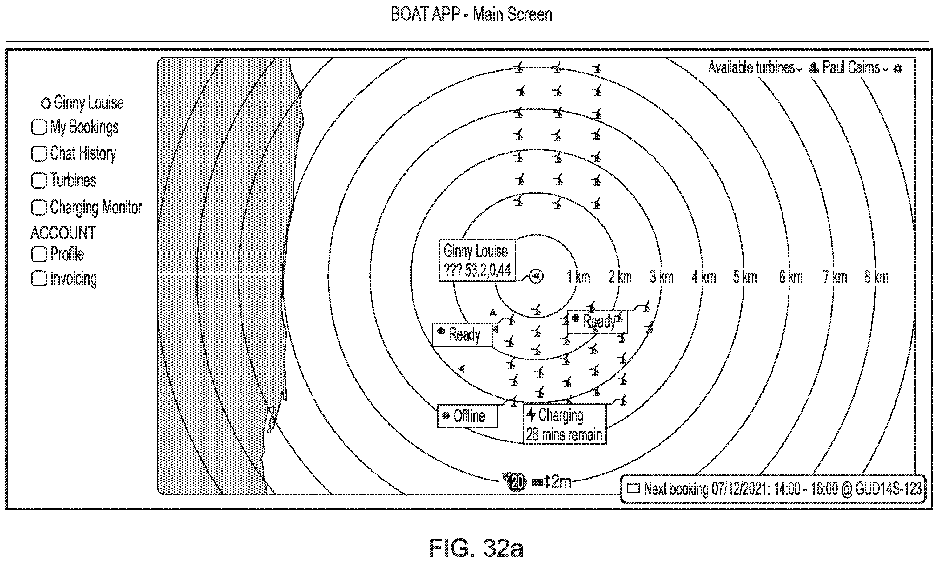

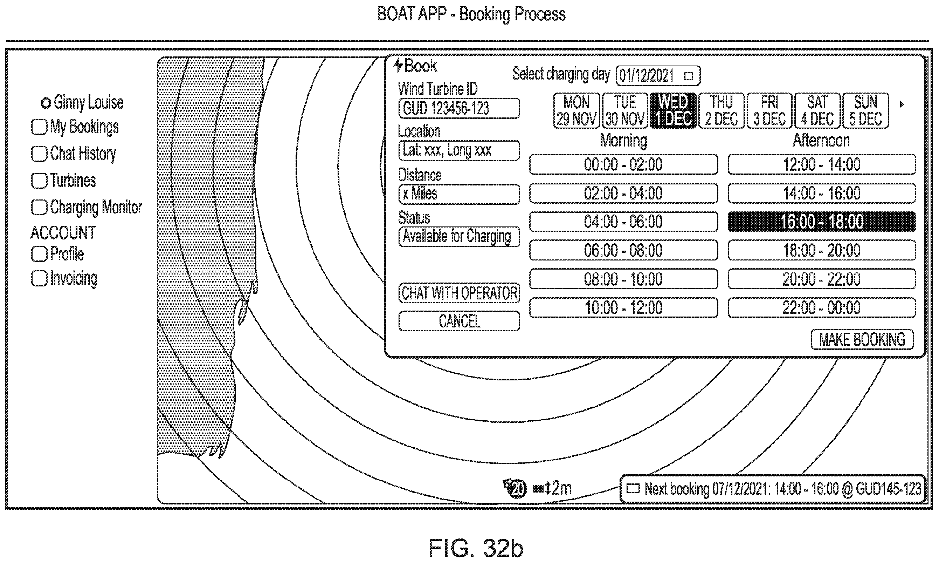

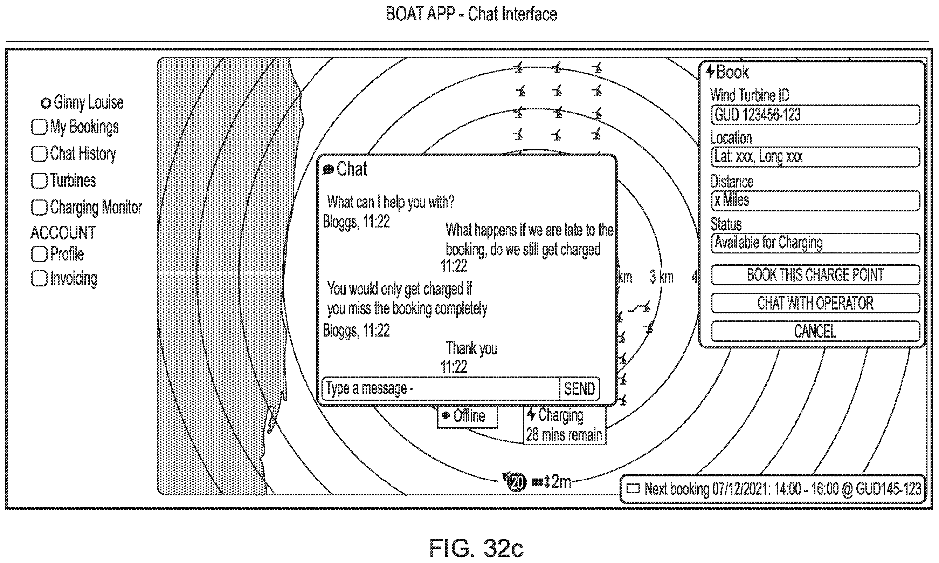

Figures 32(a) to (c) show a screenshots of the Vessel app main screen, on which the CTV crew can see the position and live status of all nearby chargers. Figure 32(b) shows a screenshot of the Vessel app booking screen. Figure 32(c) shows a screenshot of the Vessel app chat screen, from which the CTV crew has online chat functionality to the windfarm operator.

### Windfarm Software Interface (OWT)

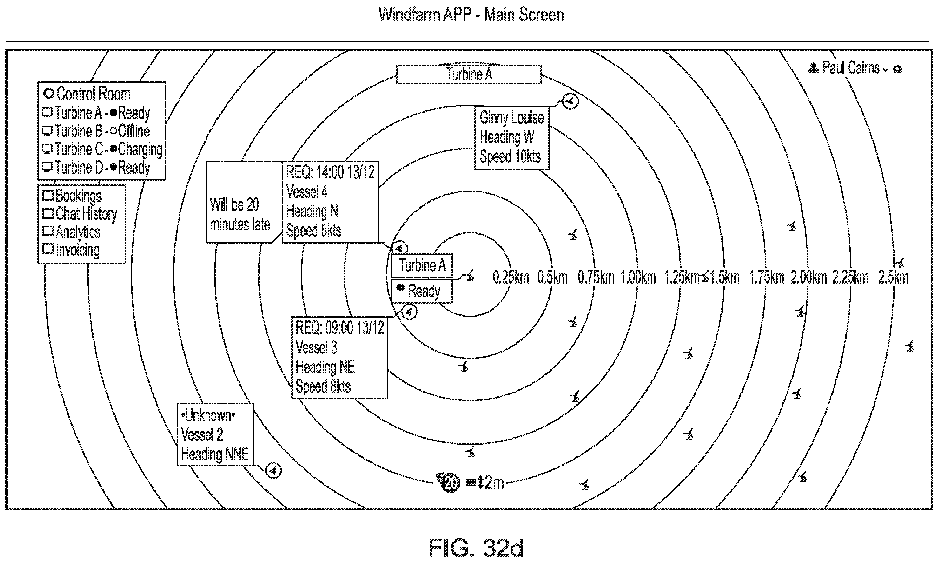

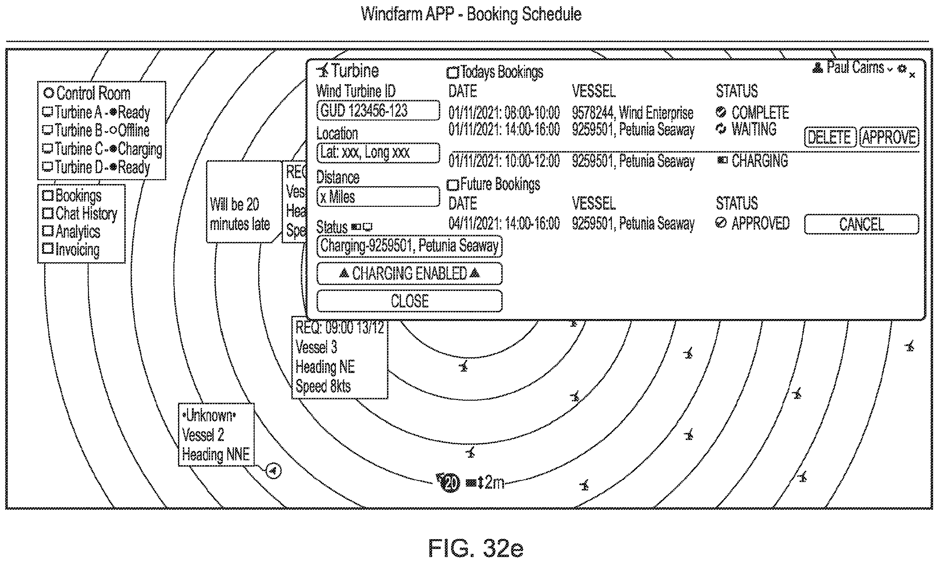

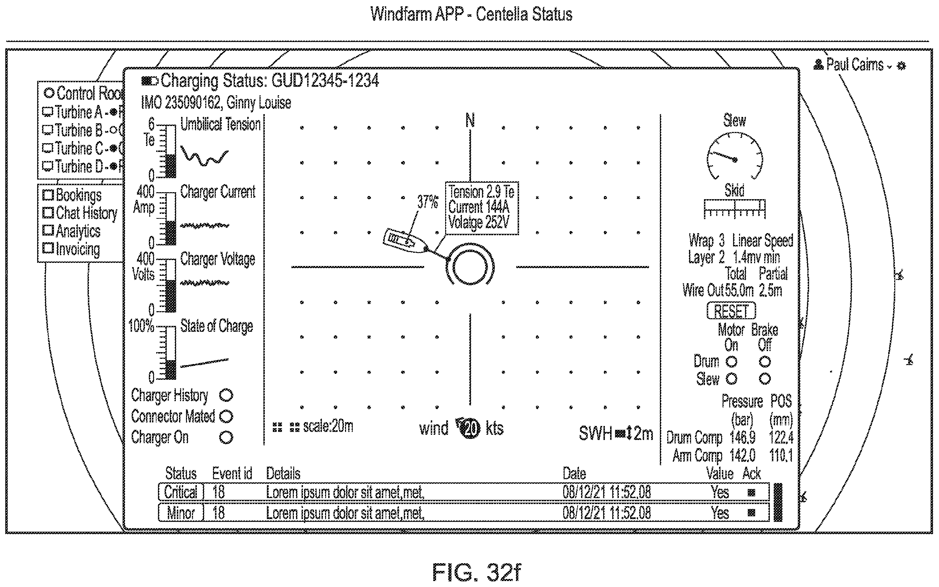

Figure 32(d) to (f) show a screenshot of the windfarm app main screen, on which the windfarm control room operators can see the position and status of all CTVs close to the charger. Figure 32(e) shows a screenshot of windfarm app booking scheduler, where the windfarm operator can see all bookings scheduled. Figure 32(f) shows a screenshot of windfarm app Centella status.

## Claims

1. An adaptive tension compensator system (100) for offshore charging of a vessel (12) via an umbilical cable (14) of a motor driven reeling drum (16) provided at a power station (10), comprising:
a reeling drum (16), configured to rotate about a first rotational axis (104);
a motor hub member (102), mounted to a motor shaft (20) of a motor (18) and configured to transmit rotary motion between said motor (18) and said reeling drum (16) along said first rotational axis (104);
a reel hub member (106), mounted to said reeling drum (16), arranged coaxial with said motor hub member and configured to transmit rotary motion between said reeling drum and said motor,
a coupling mechanism (108), operably coupled between said reel hub member and said motor hub member, adapted to transmit rotary motion between said reel hub member and said motor hub member when said motor is in a first mode, and adapted to provide a biased rotational motion of said reel hub member about said first rotational axis between a first angular position (110) and a second angular position (112) relative to said motor hub member, when said motor is in a second mode, wherein said coupling mechanism comprises a first elastic energy storage system (114) adapted to resiliently-elastically bias said reel hub member towards said first angular position, and wherein said motor shaft is actively or passively rotatable when said motor is in said first mode, and wherein said motor shaft is rotatably locked when said motor is in said second mode.

2. An adaptive tension compensator system according to claim 1, wherein said first elastic energy storage system comprises at least one first accumulator (116) configured to provide a predetermined unidirectional spring-force responsive to rotational motion of said reel hub member from said first angular position towards said second angular position relative to said motor hub member.

3. An adaptive tension compensator system according to claim 2, wherein said first accumulator is any one of a piston accumulator, a diaphragm accumulator, a bladder accumulator, a spring-type accumulator and a gas-charged accumulator.

4. An adaptive tension compensator system according to any one of claims 2 and 3, wherein said first elastic energy storage system comprises at least two diametrically opposed first accumulators, each one adapted to provide said predetermined unidirectional spring-force synchronous with the other.

5. An adaptive tension compensator system according to any one of claims 2 to 4, wherein said at least one first accumulator is operably coupled with a hydraulic or pneumatic cylinder (118).

6. An adaptive tension compensator system according to any one of the preceding claims, further comprising a gear mechanism (120) operably coupled between said motor shaft and said reel hub member, and adapted to provide a predetermined gear ratio between said motor shaft and said reeling drum.

7. An adaptive tension compensator system according to claim 6, wherein said gear mechanism is an epicyclic gear mechanism.

8. An adaptive tension compensator system according to any one of the preceding claims, further comprising a stopper assembly (122) adapted to stop rotational motion of said reel hub member at said second angular position relative to said motor hub member.

9. An adaptive tension compensator system according to claim 8, wherein said stopper assembly comprises a contact element (124) coupled to said reel hub member, and a surface element (126) coupled to said motor hub member and adapted to stoppingly engage with said contact element when said reel hub member rotatingly moves to said second angular position relative to said motor hub member.

10. An adaptive tension compensator system according to any one of the preceding claims, further comprising a cable suspension mechanism (200) configured to guidingly and suspendingly engage the umbilical cable of said reeling drum, comprising a suspension arm (202) operably coupled to a support frame (22) of said reeling drum (16) and configured to biasingly move between an upper arm position (204) and a lower arm position (206) about a pivot axis (208) arranged parallel to said first rotational axis.

11. An adaptive tension compensator system according to claim 10, wherein said cable suspension mechanism comprises a second elastic energy storage energy system (208) adapted to resiliently-elastically bias said suspension arm towards said lower arm position, and wherein said second elastic energy storage system comprises at least one second accumulator (210)
configured to provide a second unidirectional spring-force responsive to pivotal rotation of said suspension arm about said pivot axis.

12. An adaptive tension compensator system according to any one of the preceding claims, further comprising a slewing mechanism (300) operably mountable between the power station and said reeling drum, configured to permit rotation of said reeling drum about a second rotational axis (308) that is perpendicular to said first rotational axis (104).

13. An adaptive tension compensator system according to any one of the preceding claims, further comprising a skidding mechanism (400), operably mountable between the power station and said reeling drum, configured to permit movement of said reeling drum with regards to the power station along a predetermined track (402).

14. An adaptive tension compensator system according to any one of the preceding claims, further comprising a cable connector (500), mountable to a vessel (12), adapted to receive and lock an end portion (24) of the umbilical cable (14) of said reeling drum, and provide a predetermined range of motion of the received umbilical cable, wherein said cable connector comprises a two-axes gimble mechanism (502) adapted to allow said cable connector to rotatingly move about a first gimble axis (504) and a second gimble axis (506) that is perpendicular to said first gimble axis, and wherein said gimble mechanism is adapted to move said cable connector actively and/or passively.

15. An adaptive tension compensator system according to claim 14, wherein said cable connector comprises a bell-mouth member (508) adapted to guidingly receive the end portion of the umbilical cable, and a docking mechanism (510) adapted to mechanically and electrically connect with the end portion of the umbilical cable, wherein said docking mechanism is adapted to disconnect with the end portion of the umbilical cable at a predetermined pulling force acting on the umbilical cable.

## Patentansprüche

1. Adaptives Spannungsausgleichssystem (100) zum Offshore-Laden eines Schiffs (12) über ein Versorgungskabel (14) einer motorgetriebenen Aufrolltrommel (16), die an einer Kraftwerksanlage (10) bereitgestellt ist, umfassend:
eine Aufrolltrommel (16), die dazu konfiguriert ist, sich um eine erste Drehachse (104) zu drehen;
ein Motornabenelement (102), das an einer Motorwelle (20) eines Motors (18) montiert und dazu konfiguriert ist, eine Drehbewegung zwischen dem Motor (18) und der Aufrolltrommel (16) entlang der ersten Drehachse (104) zu übertragen;
ein Aufrollnabenelement (106), das an der Aufrolltrommel (16) montiert, koaxial zu dem Motornabenelement angeordnet und dazu konfiguriert ist, eine Drehbewegung zwischen der Aufrolltrommel und dem Motor zu übertragen,
einen Kopplungsmechanismus (108), der betriebsmäßig zwischen dem Aufrollnabenelement und dem Motornabenelement gekoppelt ist, der dazu ausgelegt ist, eine Drehbewegung zwischen dem Aufrollnabenelement und dem Motornabenelement zu übertragen, wenn sich der Motor in einem ersten Modus befindet, und dazu ausgelegt ist, eine vorgespannte Drehbewegung des Aufrollnabenelements um die erste Drehachse zwischen einer ersten Winkelposition (110) und einer zweiten Winkelposition (112) relativ zu dem Motornabenelement bereitzustellen, wenn sich der Motor in einem zweiten Modus befindet, wobei der Kopplungsmechanismus ein erstes elastisches Energiespeichersystem (114) umfasst, das dazu ausgelegt ist, das Aufrollnabenelement federnd elastisch hin zu der ersten Winkelposition vorzuspannen, und wobei die Motorwelle aktiv oder passiv drehbar ist, wenn sich der Motor in dem ersten Modus befindet, und wobei die Motorwelle drehbar verriegelt ist, wenn sich der Motor in dem zweiten Modus befindet.

2. Adaptives Spannungsausgleichssystem nach Anspruch 1, wobei das erste elastische Energiespeichersystem mindestens einen ersten Akkumulator (116) umfasst, der dazu konfiguriert ist, eine vorbestimmte unidirektionale Federkraft als Reaktion auf eine Drehbewegung des Aufrollnabenelements von der ersten Winkelposition hin zu der zweiten Winkelposition relativ zu dem Motornabenelement bereitzustellen.

3. Adaptives Spannungsausgleichssystem nach Anspruch 2, wobei der erste Akkumulator ein beliebiges von einem Kolbenakkumulator, einem Membranakkumulator, einem Blasenakkumulator, einem federartigen Akkumulator und einem gasgefüllten Akkumulator ist.

4. Adaptives Spannungsausgleichssystem nach einem der Ansprüche 2 und 3, wobei das erste elastische Energiespeichersystem mindestens zwei diametral gegenüberliegende erste Akkumulatoren umfasst, von denen jeder dazu ausgelegt ist, die vorbestimmte unidirektionale Federkraft synchron mit dem anderen bereitzustellen.

5. Adaptives Spannungsausgleichssystem nach einem der Ansprüche 2 bis 4, wobei der mindestens eine erste Akkumulator betriebsmäßig mit einem Hydraulik- oder Pneumatikzylinder (118) gekoppelt ist.

6. Adaptives Spannungsausgleichssystem nach einem der vorhergehenden Ansprüche, ferner umfassend einen Getriebemechanismus (120), der betriebsmäßig zwischen der Motorwelle und dem Aufrollnabenelement gekoppelt und dazu ausgelegt ist, ein vorbestimmtes Übersetzungsverhältnis zwischen der Motorwelle und der Aufrolltrommel bereitzustellen.

7. Adaptives Spannungsausgleichssystem nach Anspruch 6, wobei der Getriebemechanismus ein Planetengetriebemechanismus ist.

8. Adaptives Spannungsausgleichssystem nach einem der vorhergehenden Ansprüche, ferner umfassend eine Anschlaganordnung (122), die dazu ausgelegt ist, eine Drehbewegung des Aufrollnabenelements an der zweiten Winkelposition relativ zu dem Motornabenelement anzuhalten.

9. Adaptives Spannungsausgleichssystem nach Anspruch 8, wobei die Anschlaganordnung ein Kontaktelement (124), das an das Aufrollnabenelement gekoppelt ist, und ein Oberflächenelement (126), das an das Motornabenelement gekoppelt und dazu ausgelegt ist, anschlagend mit dem Kontaktelement in Eingriff zu treten, wenn sich das Aufrollnabenelement drehend zu der zweiten Winkelposition relativ zu dem Motornabenelement bewegt, umfasst.

10. Adaptives Spannungsausgleichssystem nach einem der vorhergehenden Ansprüche, ferner umfassend einen Kabelaufhängungsmechanismus (200), der dazu konfiguriert ist, das Versorgungskabel der Aufrolltrommel führend und aufhängend in Eingriff zu nehmen, umfassend einen Aufhängungsarm (202), der betriebsmäßig an einen Stützrahmen (22) der Aufrolltrommel (16) gekoppelt und dazu konfiguriert ist, sich vorspannend zwischen einer oberen Armposition (204) und einer unteren Armposition (206) um eine Schwenkachse (212), die parallel zu der ersten Drehachse angeordnet ist, zu bewegen.

11. Adaptives Spannungsausgleichssystem nach Anspruch 10, wobei der Kabelaufhängungsmechanismus ein zweites elastisches Energiespeichersystem (208) umfasst, das dazu ausgelegt ist, den Aufhängungsarm federnd elastisch hin zu der unteren Armposition vorzuspannen, und wobei das zweite elastische Energiespeichersystem mindestens einen zweiten Akkumulator (210) umfasst, der dazu konfiguriert ist, eine zweite unidirektionale Federkraft als Reaktion auf eine Schwenkdrehung des Aufhängungsarms um die Schwenkachse bereitzustellen.

12. Adaptives Spannungsausgleichssystem nach einem der vorhergehenden Ansprüche, ferner umfassend ein Drehwerk (300), das betriebsmäßig zwischen der Kraftwerksanlage und der Aufrolltrommel montierbar ist, das dazu konfiguriert ist, eine Drehung der Aufrolltrommel um eine zweite Drehachse (308), die senkrecht zu der ersten Drehachse (104) ist, zuzulassen.

13. Adaptives Spannungsausgleichssystem nach einem der vorhergehenden Ansprüche, ferner umfassend einen Gleitmechanismus (400), der betriebsmäßig zwischen der Kraftwerksanlage und der Aufrolltrommel montierbar ist, der dazu konfiguriert ist, eine Bewegung der Aufrolltrommel in Bezug auf die Kraftwerksanlage entlang einer vorbestimmten Spur (402) zuzulassen.

14. Adaptives Spannungsausgleichssystem nach einem der vorhergehenden Ansprüche, ferner umfassend einen Kabelverbinder (500), der an einem Schiff (12) montierbar ist, der dazu ausgelegt ist, einen Endabschnitt (24) des Versorgungskabels (14) der Aufrolltrommel aufzunehmen und zu verriegeln und einen vorbestimmten Bewegungsbereich des aufgenommenen Versorgungskabels bereitzustellen, wobei der Kabelverbinder einen zweiachsigen Kardanmechanismus (502) umfasst, der dazu ausgelegt ist, es dem Kabelverbinder zu ermöglichen, sich drehbar um eine erste Kardanachse (504) und eine zweite Kardanachse (506), die senkrecht zu der ersten Kardanachse ist, zu bewegen, und wobei der Kardanmechanismus dazu ausgelegt ist, den Kabelverbinder aktiv und/oder passiv zu bewegen.

15. Adaptives Spannungsausgleichssystem nach Anspruch 14, wobei der Kabelverbinder ein Trichterelement (508), das dazu ausgelegt ist, den Endabschnitt des Versorgungskabels führend aufzunehmen, und einen Andockmechanismus (510), der dazu ausgelegt ist, sich mechanisch und elektrisch mit dem Endabschnitt des Versorgungskabels zu verbinden, umfasst, wobei der Andockmechanismus dazu ausgelegt ist, die Verbindung mit dem Endabschnitt des Versorgungskabels bei einer vorbestimmten Zugkraft, die auf das Versorgungskabel wirkt, zu trennen.

## Revendications

1. Système de compensation de tension adaptatif (100) pour la charge en mer d'un navire (12) par l'intermédiaire d'un câble ombilical (14) d'un tambour d'enroulement (16) entraîné par moteur prévu au niveau d'une centrale électrique (10), comprenant :
un tambour d'enroulement (16), conçu pour tourner autour d'un premier axe de rotation (104) ;
un élément de moyeu de moteur (102), monté sur un arbre de moteur (20) d'un moteur (18) et conçu pour transmettre un mouvement rotatif entre ledit moteur (18) et ledit tambour d'enroulement (16) le long dudit premier axe de rotation (104) ;
un élément de moyeu d'enroulement (106), monté sur ledit tambour d'enroulement (16), agencé coaxialement audit élément de moyeu de moteur et conçu pour transmettre un mouvement rotatif entre ledit tambour d'enroulement et ledit moteur,
un mécanisme d'accouplement (108), couplé de manière opérationnelle entre ledit élément de moyeu d'enroulement et ledit élément de moyeu de moteur, adapté pour transmettre un mouvement rotatif entre ledit élément de moyeu d'enroulement et ledit élément de moyeu de moteur lorsque ledit moteur est dans un premier mode, et adapté pour fournir un mouvement rotatif sollicité dudit élément de moyeu d'enroulement autour dudit premier axe de rotation entre une première position angulaire (110) et une seconde position angulaire (112) par rapport audit élément de moyeu de moteur, lorsque ledit moteur est dans un second mode, dans lequel ledit mécanisme d'accouplement comprend un premier système de stockage d'énergie élastique (114) adapté pour solliciter de manière souple et élastique ledit élément de moyeu d'enroulement vers ladite première position angulaire, et dans lequel ledit arbre de moteur peut tourner activement ou passivement lorsque ledit moteur est dans ledit premier mode, et dans lequel ledit arbre de moteur est verrouillé en rotation lorsque ledit moteur est dans ledit second mode.

2. Système de compensation de tension adaptatif selon la revendication 1, dans lequel ledit premier système de stockage d'énergie élastique comprend au moins un premier accumulateur (116) conçu pour fournir une force de ressort unidirectionnelle prédéterminée sensible au mouvement de rotation dudit élément de moyeu d'enroulement à partir de ladite première position angulaire vers ladite seconde position angulaire par rapport audit élément de moyeu de moteur.

3. Système de compensation de tension adaptatif selon la revendication 2, dans lequel ledit premier accumulateur est l'un quelconque parmi un accumulateur à piston, un accumulateur à diaphragme, un accumulateur à vessie, un accumulateur de type à ressort et un accumulateur chargé de gaz.

4. Système de compensation de tension adaptatif selon l'une quelconque des revendications 2 et 3, dans lequel ledit premier système de stockage d'énergie élastique comprend au moins deux premiers accumulateurs diamétralement opposés, chacun étant adapté pour fournir ladite force de ressort unidirectionnelle prédéterminée de manière synchrone avec l'autre.

5. Système de compensation de tension adaptatif selon l'une quelconque des revendications 2 à 4, dans lequel ledit au moins un premier accumulateur est couplé de manière opérationnelle à un vérin (118) hydraulique ou pneumatique.

6. Système de compensation de tension adaptatif selon l'une quelconque des revendications précédentes, comprenant en outre un mécanisme d'engrenage (120) couplé de manière opérationnelle entre ledit arbre de moteur et ledit élément de moyeu d'enroulement, et adapté pour fournir un rapport d'engrenage prédéterminé entre ledit arbre de moteur et ledit tambour d'enroulement.

7. Système de compensation de tension adaptatif selon la revendication 6, dans lequel ledit mécanisme d'engrenage est un mécanisme d'engrenage épicycloïdal.

8. Système de compensation de tension adaptatif selon l'une quelconque des revendications précédentes, comprenant en outre un ensemble d'arrêt (122) adapté pour arrêter un mouvement de rotation dudit élément de moyeu d'enroulement au niveau de ladite seconde position angulaire par rapport audit élément de moyeu de moteur.

9. Système de compensation de tension adaptatif selon la revendication 8, dans lequel ledit ensemble d'arrêt comprend un élément de contact (124) couplé audit élément de moyeu d'enroulement, et un élément de surface (126) couplé audit élément de moyeu de moteur et adapté pour entrer en prise d'arrêt avec ledit élément de contact lorsque ledit élément de moyeu d'enroulement se déplace de manière rotative vers ladite seconde position angulaire par rapport audit élément de moyeu de moteur.

10. Système de compensation de tension adaptatif selon l'une quelconque des revendications précédentes, comprenant en outre un mécanisme de suspension de câble (200) conçu pour venir en prise de guidage et de suspension avec le câble ombilical dudit tambour d'enroulement, comprenant un bras de suspension (202) couplé de manière opérationnelle à un cadre de support (22) dudit tambour d'enroulement (16) et conçu pour se déplacer de manière sollicitée entre une position de bras supérieure (204) et une position de bras inférieure (206) autour d'un axe de pivot (212) disposé parallèlement audit premier axe de rotation.

11. Système de compensation de tension adaptatif selon la revendication 10, dans lequel ledit mécanisme de suspension de câble comprend un second système d'énergie de stockage élastique (208) adapté pour solliciter de manière souple et élastique ledit bras de suspension vers ladite position de bras inférieure, et dans lequel ledit second système de stockage d'énergie élastique comprend au moins un second accumulateur (210)
conçu pour fournir une seconde force de ressort unidirectionnelle sensible à la rotation pivotante dudit bras de suspension autour dudit axe de pivot.

12. Système de compensation de tension adaptatif selon l'une quelconque des revendications précédentes, comprenant en outre un mécanisme d'orientation (300) pouvant être monté de manière opérationnelle entre la centrale électrique et ledit tambour d'enroulement, conçu pour permettre une rotation dudit tambour d'enroulement autour d'un second axe de rotation (308) qui est perpendiculaire audit premier axe de rotation (104).

13. Système de compensation de tension adaptatif selon l'une quelconque des revendications précédentes, comprenant en outre un mécanisme de patinage (400), pouvant être monté de manière opérationnelle entre la centrale électrique et ledit tambour d'enroulement, conçu pour permettre un mouvement dudit tambour d'enroulement par rapport à la centrale électrique le long d'une piste prédéterminée (402).

14. Système de compensation de tension adaptatif selon l'une quelconque des revendications précédentes, comprenant en outre un raccord de câble (500), pouvant être monté sur un navire (12), adapté pour recevoir et verrouiller une partie d'extrémité (24) du câble ombilical (14) dudit tambour d'enroulement, et fournir une plage de mouvement prédéterminée du câble ombilical reçu, dans lequel ledit raccord de câble comprend un mécanisme de cardan à deux axes (502) adapté pour permettre audit raccord de câble de se déplacer de manière rotative autour d'un premier axe de cardan (504) et d'un second axe de cardan (506) qui est perpendiculaire audit premier axe de cardan, et dans lequel ledit mécanisme de cardan est adapté pour déplacer ledit raccord de câble de manière active et/ou passive.

15. Système de compensation de tension adaptatif selon la revendication 14, dans lequel ledit raccord de câble comprend un élément d'embouchure (508) adapté pour recevoir en guidage la partie d'extrémité du câble ombilical, et un mécanisme d'ancrage (510) adapté pour se raccorder mécaniquement et électriquement à la partie d'extrémité du câble ombilical, dans lequel ledit mécanisme d'ancrage est adapté pour se détacher de la partie d'extrémité du câble ombilical sous l'action d'une force de traction prédéterminée sur le câble ombilical.
